(19) Europäisches Patentamt / European Patent Office / Office européen des brevets

(11) **EP 4 088 237 B1**

(12) **EUROPEAN PATENT SPECIFICATION**

(45) Date of publication and mention
of the grant of the patent:
**12.02.2025 Bulletin 2025/07**

(21) Application number: **21738131.8**

(22) Date of filing: **06.01.2021**

(51) International Patent Classification (IPC):
**H04L 9/00** *(2022.01)*    **G06Q 20/00** *(2012.01)*

(52) Cooperative Patent Classification (CPC):
**G06Q 20/405; G06Q 20/02; G06Q 20/10;**
**H04L 9/50;** G06Q 2220/00

(86) International application number:
**PCT/US2021/012232**

(87) International publication number:
**WO 2021/141929 (15.07.2021 Gazette 2021/28)**

(54) **SYSTEMS AND METHODS FOR COMPLIANCE CHECKS**

SYSTEME UND VERFAHREN ZUR KONFORMITÄTSPRÜFUNG

SYSTÈMES ET PROCÉDÉS POUR CONTRÔLES DE CONFORMITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2020 US 202062957508 P**

(43) Date of publication of application:
**16.11.2022 Bulletin 2022/46**

(73) Proprietor: **Cambridge Blockchain, Inc.**
**Cambridge, MA 02142 (US)**

(72) Inventors:
• **OBERHAUSER, Alex**
  **Medford, MA 02155 (US)**
• **CHEUNG HUGHES, Ling**
  **Cambridge, MA 02142 (US)**
• **KADISH, Eugene**
  **Cambridge, MA 02142 (US)**

(74) Representative: **Hoffmann Eitle**
**Patent- und Rechtsanwälte PartmbB**
**Arabellastraße 30**
**81925 München (DE)**

(56) References cited:
US-A1- 2015 310 426    US-A1- 2016 330 034
US-A1- 2016 358 165    US-A1- 2017 149 796
US-A1- 2017 149 796    US-A1- 2017 222 814
US-A1- 2018 068 280

• CHRISTINA GARMAN ET AL: "Decentralized Anonymous Credentials", IACR, INTERNATIONAL ASSOCIATION FOR CRYPTOLOGIC RESEARCH, vol. 20131015:180746, 15 October 2013 (2013-10-15), pages 1 - 21, XP061008285, DOI: 10.14722/NDSS.2014.23253
• FLORIAN TRAMER ET AL: "Sealed-Glass Proofs: Using Transparent Enclaves to Prove and Sell Knowledge", IACR, INTERNATIONAL ASSOCIATION FOR CRYPTOLOGIC RESEARCH, vol. 20160816:131050, 16 August 2016 (2016-08-16), pages 1 - 16, XP061021568

EP 4 088 237 B1

**Description**

RELATED APPLICATION

This application claims priority benefit under 35 U.S.C. § 119(e) to U.S. Provisional Application No. 62/957,508, filed on January 6, 2020, entitled "SYSTEMS AND METHODS FOR COMPLIANCE CHECKS," bearing Attorney Docket No. C1494.70005US00, which is incorporated herein by reference in its entirety.

BACKGROUND

Various cryptosystems may be used to provide information security. For instance, encryption techniques based on symmetric cryptosystems and asymmetric cryptosystems may be used to provide confidentiality, while signature techniques based on asymmetric cryptosystems, as well as hashing techniques, may be used to provide integrity.

US 2017/222814 A1 relates to a method comprising acts of: using a plurality of measurements taken from a user to generate an identifier for the user, the identifier comprising a cryptographic proof of the plurality of measurements; instantiating a digital identity representation associated with the identifier for the user, the digital identity representation comprising program code that implements rules for attestation; generating an electronic signature over the digital identity representation; and publishing the digital identity representation and the electronic signature to a distributed ledger system.

US 2017/149796 A1 relates to systems and techniques for allowing a third party verifier to verify aspects of secured data, or successful communication thereof. For example, a message or other data may be associated with a shared manifest that describes aspects of some data but does not reveal or expose the data. As a result, the data may be kept private while selective privacy and verification with respect to the data is achieved by the inclusion of only selected aspects of said data in the shared manifest.

CHRISTINA GARMAN ET AL, "Decentralized Anonymous Credentials", IACR, INTERNATIONAL ASSOCIATION FOR CRYPTOLOGIC RESEARCH, (20131015), vol. 20131015:180746, doi:10.14722/NDSS.2014.23253, pages 1 - 21, XP061008285 proposes an anonymous credential scheme that eliminates the need for a trusted credential issuer.

FLORIAN TRAMER ET AL, "Sealed-Glass Proofs: Using Transparent Enclaves to Prove and Sell Knowledge", IACR, INTERNATIONAL ASSOCIATION FOR CRYPTOLOGIC RESEARCH, (20160816), vol. 20160816:131050, pages 1 - 16, XP061021568 proposes a cryptographic primitive called a Sealed-Glass Proof that models computation possible in an isolated execution environment with unbounded leakage, and thus in the face of arbitrary side-channels.

SUMMARY

In accordance with some embodiments, a computer-implemented method is provided for performing a compliance check on a proposed transfer of one or more digital assets between a user and a counterparty. The method comprises acts of: receiving one or more attribute values of the counterparty, the one or more attribute values comprises a first attribute value indicating a status of a distributed ledger address of the counterparty; accessing, from a distributed ledger, one or more attribute attestations corresponding, respectively, to the one or more attribute values; checking the one or more attribute attestations against the one or more attribute values, comprising: checking whether each attribute attestation includes a cryptographic proof of the corresponding attribute value; checking whether the cryptographic proof is electronically signed by a trusted entity; and determining, based on the first attribute value indicating the status of the distributed ledger address of the counterparty, whether one or more compliance requirements are triggered.

In accordance with some embodiments, a computer-implemented method is provided for performing a compliance check. The method comprises acts of: receiving a commitment C for a committed value $\sigma$, wherein: the committed value $\sigma$ is in a set S of values; and the commitment C is generated, using a cryptographic commitment scheme, based on the committed value $\sigma$; accessing, from a distributed ledger, an attestation for the commitment C; checking the attestation against the commitment C, comprising: checking whether the attestation includes a cryptographic proof of the commitment C; and checking whether the cryptographic proof of the commitment C is electronically signed by a trusted entity; receiving a blinded representative V of the committed value $\sigma$; using the commitment C and the blinded representative V of the committed value $\sigma$ to perform a proof of knowledge; and in response to successfully checking the attestation against the commitment C and successfully performing the proof of knowledge, authorizing a proposed transfer of one or more digital assets.

In accordance with some embodiments, a computer-implemented method is provided for performing a know-your-customer check. The method comprises acts of: verifying an attribute value of an entity; in responses to successfully verifying the attribute value, electronically signing a cryptographic proof of a commitment C for a committed value $\sigma$, wherein: the committed value $\sigma$ is selected, based on the attribute value, from a set S of values; and the commitment C is generated, based on the committed value $\sigma$, using a cryptographic commitment scheme.

In accordance with some embodiments, a system is provided, comprising at least one processor and at least one computer-readable storage medium having stored thereon instructions which, when executed, program the at least one processor to perform any of the methods described herein.

In accordance with some embodiments, at least one computer-readable storage medium is provided, having stored thereon instructions which, when executed, program at least one processor to perform any of the methods described herein.

BRIEF DESCRIPTION OF DRAWINGS

FIG. 1A shows an illustrative data management system 100, in accordance with some embodiments.
FIG. 1B shows illustrative data management services 110A-B and illustrative distributed ledger clients 115A-B, in accordance with some embodiments.
FIG. 1C shows an illustrative process 120 for data sharing and/or attestation, in accordance with some embodiments.
FIG. 2 shows an illustrative state machine 200 that describes transitions among different states of an attribute attestation, in accordance with some embodiments.
FIG. 3A shows an illustrative process 300 for attribute attestation by a trusted entity, in accordance with some embodiments.
FIG. 3B shows another illustrative process 320 for attribute attestation by a trusted entity, in accordance with some embodiments.
FIG. 3C shows an illustrative process 340 for attribute issuance by a trusted entity, in accordance with some embodiments.
FIG. 4 shows an illustrative process 400 for attribute acceptance by a service provider, in accordance with some embodiments.
FIG. 5A shows illustrative data collections 500A-C, in accordance with some embodiments.
FIG. 5B shows the illustrative data collection 500B in the example of FIG. 5A, as well as illustrative data collections 500D-E, in accordance with some embodiments.
FIG. 6 shows illustrative data management services 600A-C, in accordance with some embodiments.
FIG. 7A shows an illustrative process 700 for cryptographic commitment, in accordance with some embodiments.
FIG. 7B shows an illustrative process 750 for proof of knowledge, in accordance with some embodiments.
FIG. 8 shows, schematically, an illustrative computer 1000 on which any aspect of the present disclosure may be implemented.

DETAILED DESCRIPTION

Aspects of the present disclosure relate to systems and methods for compliance checks.

In some data management systems, an entity may have a data management service that handles digital data on behalf of the entity. Any suitable type of digital data may be managed, including, but not limited to, personally identifiable information (PII), cryptographic keys for accessing digital assets, etc.

In such a system, data management services of different entities may communicate with each other. As one example, a data management service of a user may send attribute values (e.g., date of birth) to a data management service of a trusted entity, and may request that the trusted entity verify and attest to the attribute values. The trusted entity may verify the attribute values in any suitable manner, for instance, by reviewing physical documents (e.g., the user's passport). If the verification is successful, the trusted entity may attest to the attribute values, for instance, by electronically signing cryptographic proofs of the attribute values.

As another example, a data management service of a user may send attribute values to a data management service of a counterparty. The counterparty may check that the attribute values have been attested to by a trusted entity. For instance, the counterparty may check whether cryptographic proofs of the attribute values have been electronically signed by the trusted entity.

In some embodiments, data management services of a user, a trusted entity, and/or a counterparty may form a privacy layer, where sensitive information (e.g., attribute values) may be shared via secure channels. The data management services may have associated distributed ledger clients, which may form a trust layer, where non-sensitive information (e.g., attribute attestations) may be published to a distributed ledger.

The inventors have recognized and appreciated that a data management system may be used to provide a custodial key service for managing cryptographic keys of digital assets. In some embodiments, a custodial key service may store a cryptographic key of a digital asset for an owner of the digital asset. If the asset owner wishes to transfer the digital asset to an asset recipient, the asset owner may submit a transfer request to the custodial key service. Upon receiving a transfer request, the custodial key service may check an identity of an entity from which the transfer request is received to confirm that the entity is indeed the asset owner. Additionally, or alternatively, the custodial key service may check an identity of the asset recipient. Additionally, or alternatively, the custodial key service may check compliance with one or more government and/or other regulations for settling, safekeeping, and/or reporting of assets. Once the transfer request is checked, the custodial key service may use the cryptographic key of the digital asset to sign the transfer request. In this manner, the asset owner may authorize the transfer without directly handling the cryptographic key.

In some embodiments, interactions between an asset owner and one or more custodial key services may not be exposed to an asset recipient. For instance, from the asset recipient's point of view, a transfer of a digital asset may proceed in a same way whether a cryptographic key corresponding to the digital asset is managed by the asset owner or by a custodial key service. In this manner, different custodial key service backend solutions may be supported (e.g., solutions provided by different custodians, different extensions provided by a same custodian, etc.).

Any suitable compliance check may be performed by a custodial key service. As one example, a custodial key service may store a list of sanctioned entities, and may reject an attempted transfer involving a sanctioned entity. As another example, a custodial key service may store a list of sanctioned jurisdictions, and may reject an attempted transfer into or out of a sanctioned jurisdiction. As yet another example, a custodial key service may reject an attempted transfer that would cause a cryptocurrency account balance to fall below, or exceed, a selected threshold. However, it should be appreciated that aspects of the present disclosure are not limited to any particular type of compliance check, or to performing any compliance check at all.

It should be appreciated that the techniques introduced above and discussed in greater detail below may be implemented in any of numerous ways, as the techniques are not limited to any particular manner of implementation. Examples of implementation details are provided herein solely for illustrative purposes. Furthermore, the techniques disclosed herein may be used individually or in any suitable combination, as aspects of the present disclosure are not limited to using any particular technique or combination of techniques.

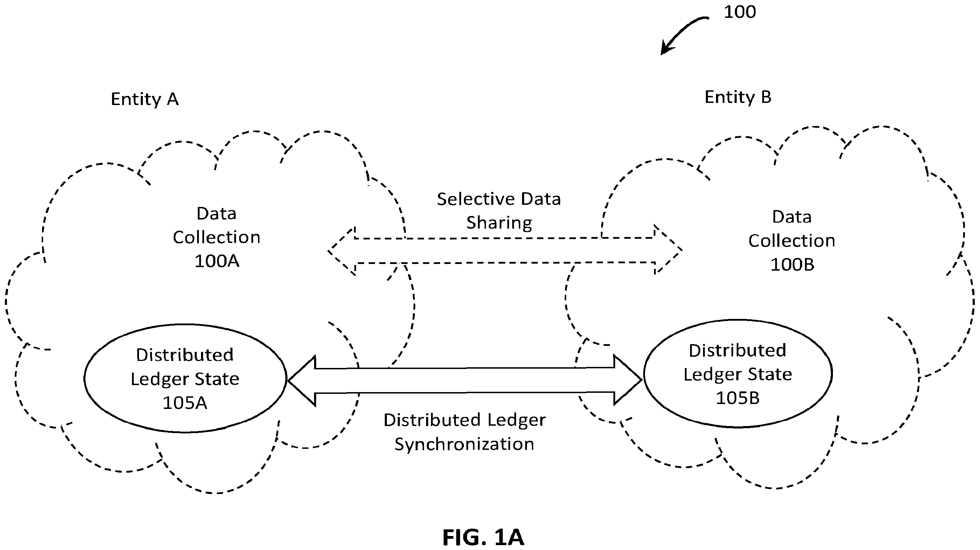

FIG. 1A shows an illustrative data management system 100, in accordance with some embodiments. In this example, the data management system 100 includes data collections 100A and 100B, which may be associated with entities A and B, respectively. The entity A may be of any suitable type, such as user, organization, identifiable object, physical space, etc., and likewise for the entity B.

In some embodiments, the entity A may selectively share, with the entity B, data from the data collection 100A. Additionally, or alternatively, the entity B may selectively share, with the entity A, data from the data collection 100B. For instance, the entities A and B may perform a handshake and establish a secure communication channel, via which data may be transmitted with end-to-end encryption.

In some embodiments, each of the entities A and B may be associated with one or more nodes in a network of nodes that collectively maintain a distributed ledger. The distributed ledger may include digital records replicated among a plurality of nodes in the network. The nodes may carry out a synchronization protocol, whereby a change made at a node to a local copy of a digital record may be propagated through the network, and other nodes may update their respective copies of that digital record accordingly.

In some embodiments, the distributed ledger may be implemented using a blockchain. The blockchain may include a plurality of blocks, where each block may include a plurality of transactions. In some embodiments, the plurality of transactions may be ordered, for example, chronologically. Additionally, or alternatively, each newly added block may be linked to a latest previous block. Such a structure may be resistant to tampering, and may therefore be used to confirm whether a given transaction did take place, and/or when the transaction took place. For instance, a block may be added to the blockchain only if all nodes (or a subset of nodes with sufficient computation power) in a network implementing the blockchain agree on the block.

In some embodiments, a block generating node (sometimes called a miner) may invest computation power to generate a new block that is linked to a latest previous block. The fastest node that is able to solve a computationally intensive mathematical puzzle (e.g., identifying a preimage of a hash with a certain number of leading zeros) may be rewarded with an internal digital asset (e.g., a bitcoin). Depending on how much computation power is available in the network at a given point in time, a more or less complex mathematical puzzle may be used. In this manner, blocks may be generated within a selected time window, and conflicts may be reduced.

It should be appreciated that aspects of the present disclosure are not limited to using a proof-of-work approach to achieve distributed consensus. In some embodiments, a proof-of-stake approach may be used. It should also be appreciated that any suitable blockchain implementation may be used, such as Ethereum, Hyperledger Fabric, etc. Furthermore, aspects of the present disclosure are not limited to using a blockchain to implement a distributed ledger. In some embodiments, one or more directed acyclic graphs (e.g., IOTA Tangle), hashgraphs (e.g. Swirlds), hash trees (e.g., Guardtime keyless signatures infrastructure), and/or distributed ledgers with no globally-shared chain (e.g., R3 Corda), may be used in addition to, or instead of, one or more blockchains.

Returning to FIG. 1A, the entity A may, in some embodiments, maintain a distributed ledger state 105A. The entity A may publish non-sensitive data (e.g., cryptographic proofs of sensitive data) to the distributed ledger by storing the non-sensitive data as part of the distributed ledger state 105A. Likewise, the entity B may maintain a distributed ledger state 105B, and may publish non-sensitive data (e.g., cryptographic proofs of sensitive data) to the distributed ledger by storing the non-sensitive data as part of the distributed ledger state 105B.

In some embodiments, the network nodes associated with the entities A and B may participate in a distributed ledger synchronization protocol, so that non-sensitive data published by the entity A may be replicated in the distributed ledger state 105B maintained by the entity B, and non-sensitive data published by the entity B may be replicated in the distributed ledger state 105A maintained by the entity A.

It should be appreciated that aspects of the present disclosure are not limited to any particular way of maintaining a distributed ledger state, or to maintaining a distributed ledger state at all. In some embodiments, an entity may not maintain a distributed ledger state, and may access a distributed ledger via a node in a network of nodes that collectively maintain the distributed ledger. Additionally, or alternatively, an entity may maintain a distributed ledger state separately from the entity's data collection. Non-sensitive data may be stored in the distributed ledger state, as well as in the entity's data collection. Additionally, or alternatively, an entity may maintain a distributed ledger state as part of the entity's data collection (e.g., as shown in FIG. 1A), and non-sensitive data may not be duplicated.

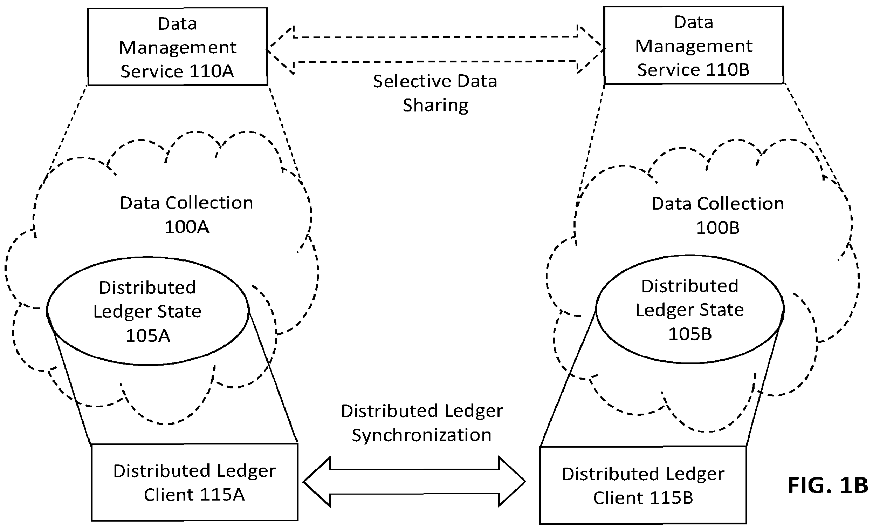

FIG. 1B shows illustrative data management services 110A-B and illustrative distributed ledger clients 115A-B, in accordance with some embodiments. For instance, the data management services 110A-B may manage, respectively, the illustrative data collections 100A-B in the example of FIG. 1A. Likewise, the distributed ledger clients 115A-B may manage, respectively, the illustrative distributed ledger states 105A-B in the example of FIG. 1A.

In some embodiments, a data management service (e.g., the data management service 110A or 110B) may include a software program for managing personally identifiable information (PII), cryptographic keys for accessing digital assets, and/or other sensitive data. For instance, a data management service may be implemented as a virtual container that wraps the software program in a file system to allow the software program to run consistently in any environment. The file system may include a runtime system, one or more system tools, one or more system libraries, etc. However, it should be appreciated that aspects of the present disclosure are not so limited. In some embodiments, a data management service may simply include a software program for managing sensitive data, without an accompanying file system.

In the example of FIG. 1B, the data management services 110A-B communicate with each other via a secure channel (e.g., with end-to-end encryption) to effectuate selective data sharing between the data collections 100A-B. Additionally, or alternatively, the data management services 110A-B may each provide an application programming interface to one or more applications (not shown). The entities A and B may engage in transactions (e.g., opening an account, making a purchase, accessing data, etc.) via such applications.

In some embodiments, the data collections 100A-B may include values of attributes of the entities A and B (e.g., a birth date, a social security number, a private key associated with a cryptocurrency address, an employer identification number, a device serial number, a building access code, etc.). Cryptographic proofs (e.g., salted hashes) of such attribute values may be stored in the distributed ledger states 105A-B, which may be managed by the distributed ledger clients 115A-B, respectively. The distributed ledger clients 115A-B may participate in a distributed ledger protocol to synchronize the distributed ledger states 105A-B with a distributed ledger, thereby publishing the cryptographic proofs to a network of nodes maintaining the distributed ledger.

In some embodiments, a cryptographic proof may be derived in a selected manner from an attribute value of an attribute owner, and may be signed by a designated trusted entity (e.g., an entity that issued the attribute value, or has verified correctness thereof). A counterparty with which the attribute owner has shared the attribute value may readily check that the cryptographic proof was indeed derived from the attribute value in the selected manner, and that the cryptographic proof was indeed signed by the designated trusted entity. However, it may be computationally infeasible for another entity to reconstruct the attribute value from the cryptographic proof alone. In this manner, competing objectives of privacy and transparency may be achieved simultaneously.

Although salted hashes are described herein as examples of cryptographic proofs, it should be appreciated that aspects of the present disclosure are not limited to using a hash function to generate a cryptographic proof. In some embodiments, a cryptographic proof may be generated based on factorization, discrete logarithm, etc. Additionally, or alternatively, a cryptographic proof may include a zero knowledge proof (ZKP), such as a non-interactive ZKP (e.g., zk-SNARK).

In some embodiments, the entity A may evidence a trust relationship with the entity B by publishing a data structure to the distributed ledger. For instance, the entity A may assemble one or more attribute attestations into a badge, where an attribute attestation may include a cryptographic proof of an attribute value stored in the data collection 100A of the entity A. The entity A may publish the badge to the distributed ledger with an indication that the badge is associated with the entity B. In this manner, the badge may later be accessed from the distributed ledger as evidence that the entity A has shared the one or more selected attribute values with the entity B, without publishing the attribute values themselves to the distributed ledger. However, it should be appreciated that aspects of the present disclosure are not limited to organizing attributes in any particular way, or at all.

Although some details of implementation are described above in connection with FIGs. 1A-B, it should be appreciated that such details are provided solely for purposes of illustration. The techniques introduced above and/or discussed in detail below are not limited to any particular manner of implementation. For instance, while the illustrative data management service 110A and the illustrative distributed ledger client 115A are shown in FIG. 1B as separate components, functionalities of these components may, in some embodiments, be implemented by a single component, and likewise for the illustrative data management service 110B and the illustrative distributed ledger client 115B. Additionally, or alternatively, the data management services 110A and 110B may access a common distributed ledger state managed by a common distributed ledger client.

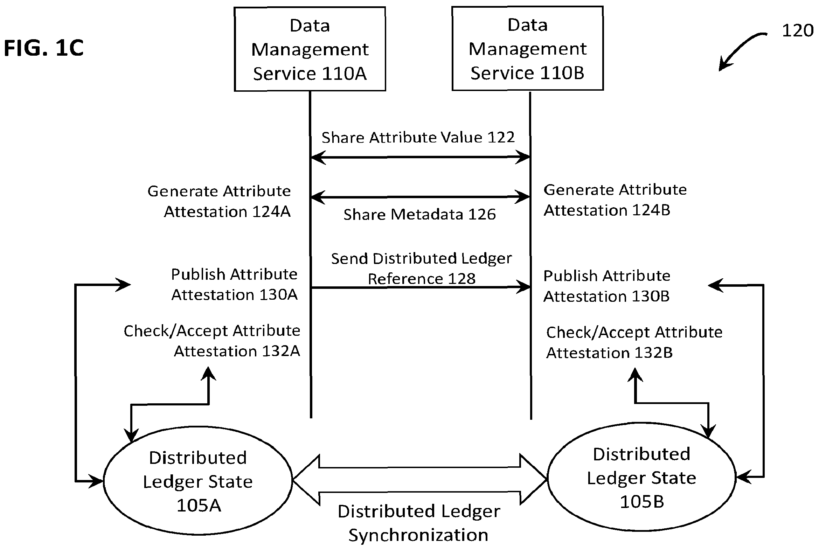

FIG. 1C shows an illustrative process 120 for data sharing and/or attestation, in accordance with some embodiments. For instance, the process 120 may be performed between the illustrative entities A and B in the example of FIG. 1A. The entities A and B may share one or more attribute values via the illustrative data management services 110A-B in the example of FIG. 1B. Additionally, or alternatively, the entities A and B may use the illustrative distributed ledger clients 115A-B in the example of FIG. 1B to attest to the one or more attribute values via a distributed ledger.

In some embodiments, the entity A may be a natural person, and the one or more attribute values may include personal data of the entity A. For instance, the entity A's data collection (e.g., the illustrative data collection 100A in the example of FIG. 1A) may include attribute values such as date of birth, passport number, credit card number, mailing address, annual income, etc. However, it should be appreciated that the techniques described herein may be used to manage any suitable type of data in addition to, or instead of, personal data. For instance, in some embodiments, the entity A may be an organization, an identifiable object, a physical space, etc., and the process 120 may be used for sharing and/or attestation of one or more attribute values relating to the organization, the identifiable object, the physical space, etc.

Likewise, the entity B may be of any suitable type, such as natural person, organization, identifiable object, physical space, etc. As one example, the entity B may be a trusted entity (e.g., a government agency such as a department of motor vehicles, a credit bureau, an employer, a bank, a university, a healthcare provider, a utility company, a landlord, etc.). The entity A may select one or more attribute values of the entity A to be verified, and/or attested to, by the entity B. Additionally, or alternatively, the entity B may issue, and/or attest to, one or more attribute values of the entity A.

As another example, the entity B may be a service provider (e.g., a bank, a payment processing company, a merchant, a social media company, etc.). Before the entity C provides a service to the entity A (e.g., opening a bank account, issuing a credit score, processing a payment, shipping an order, publishing a social media post, etc.), the entity B may request that the entity A provide a selected set of one or more attribute values (e.g., pursuant to regulations such as know-your-customer regulations, anti-money-laundering regulations, anti-foreign-meddling regulations, etc.). The entity B may check a first attestation of an attribute value to confirm that the attribute value has been issued or verified by a trusted entity. Additionally, or alternatively, the entity B may sign a second attestation of the attribute value to evidence that the entity B has accepted the attribute value.

Referring to FIG. 1C, the entities A and B may, at act 122, share one or more attribute values. In some embodiments (e.g., where the entity B is a trusted entity that verifies attribute values received from the entity A), the data management service 110A may cause the illustrative distributed ledger client 115A in the example of FIG. 1B to trigger an on-ledger "Verification Request" event to the illustrative distributed ledger client 115B, which may notify the data management service 110B accordingly. The "Verification Request" event may identify one or more attributes. In response, the data management service 110B may query the data management service 110A, and the data management service 110A may send one or more corresponding attribute values to the data management service 110B.

In some embodiments (e.g., where the entity B is a trusted entity that issues attribute values to the entity A), the data management service 110A may cause the distributed ledger client 115A to trigger an on-ledger "Issuance Request" event to the distributed ledger client 115B, which may notify the data management service 110B accordingly. The "Issuance Request" event may identify one or more attributes. In response, the data management service 110B may send one or more corresponding attribute values to the data management service 110A.

In some embodiments (e.g., where the entity B is a service provider that requests attribute values from the entity A), the data management service 110B may cause the distributed ledger client 115B to trigger an on-ledger "Submission Request" event to the distributed ledger client 115A, which may notify the data management service 110A accordingly. The "Submission Request" event may identify one or more attributes. In response, the data management service 110A may send the one or more attribute values to the data management service 110B.

In some embodiments, the one or more attribute values may be shared via a secure channel that is outside the distributed ledger. Additionally, or alternatively, the data management service 110A (or 110B, respectively) may cause the distributed ledger client 115A (or 115B, respectively) to send the one or more attribute values to the distributed ledger client 115B (or 115A, respectively) via the distributed ledger. The distributed ledger client 115B (or 115A, respectively) may in turn provide the one or more attribute values to the data management service 110B (or 110A, respectively). The one or more attribute values may be encrypted for transmission, for example, using a public key associated with the distributed ledger client 115B (or 115A, respectively).

In some embodiments, one or more attribute attestations may be prepared for the one or more attribute values shared between the entities A and B. For example, a cryptographic proof may be generated for an attribute value, and may be included in a corresponding attribute attestation. The cryptographic proof may be generated in any suitable manner, as aspects of the present disclosure are not so limited. For instance, in some embodiments, a cryptographic hash function may be applied to the attribute value, with or without a randomly generated salt.

In some embodiments, an attribute attestation may include one or more items of metadata, such as metadata indicating how a cryptographic proof in the attribute attestation was generated and/or how the cryptographic proof is to be checked. For instance, the attribute attestation may include metadata identifying a cryptographic scheme (e.g., a cryptographic hash function, an asymmetric cryptosystem, etc.) used to generate the cryptographic proof. Additionally, or alternatively, an attribute attestation may include metadata indicating that the attribute attestation is to be checked and/or accepted by a selected entity. Additionally, or alternatively, an attribute attestation may include metadata indicating a procedure whereby a corresponding attribute value is to be, or has been, verified. For instance, the metadata may indicate that the attribute value is verified by physically examining at least two forms of government-issued photo identification.

As described below, an attribute attestation may, in some embodiments, be published to the distributed ledger. Accordingly, metadata in an attribute attestation may be referred to herein as public metadata. However, it should be appreciated that aspects of the present disclosure are not limited to having any particular type of metadata, or any metadata at all, in an attribute attestation.

It should also be appreciated that aspects of the present disclosure are not limited to having one attribute attestation per attribute value, or any attribute attestation at all. In some embodiments, an attribute attestation may be generated for multiple attribute values. For instance, a cryptographic proof may be generated by hashing a data record having multiple fields storing the respective attribute values. Additionally, or alternatively, a tree structure may be generated, where each leaf node may include a cryptographic proof of an attribute value, and each non-leaf node may include a cryptographic proof of one or more cryptographic proofs of one or more child nodes of the non-leaf node.

An attribute attestation may be generated by any suitable entity. For instance, the entity A may generate an attribute attestation. This is shown as act 124A in the example of FIG. 1C.

Additionally, or alternatively, the entity B may generate an attribute attestation. This is shown as act 124B in the example of FIG. 1C.

At act 126, the entities A and B may share relevant metadata. This may be done via the secure channel and/or the distributed ledger, for example, as described above in connection with sharing of the one or more attribute values at act 122. In some embodiments, the shared metadata may not be published to the distributed ledger, and may therefore be referred to as private metadata.

Any suitable metadata may be shared between the entities A and B, such as metadata for use in checking a cryptographic proof of an attribute value. For instance, the cryptographic proof may be generated using a selected cryptographic scheme (e.g., a cryptographic hash function, an asymmetric cryptosystem, etc.), and the metadata may include an input to the cryptographic scheme (e.g., a randomly generated salt provided as input to the cryptographic hash function, an initialization vector provided as input to the asymmetric cryptosystem, etc.).

In some embodiments, the entity A may generate an attribute attestation, and may send corresponding metadata to the entity B. Additionally, or alternatively, the entity B may generate an attribute attestation, and may send corresponding metadata to the entity A. However, aspects of the present disclosure are not limited to generating an attribute attestation or sharing corresponding metadata in any particular manner. In some embodiments, metadata may be shared prior to an attribute attestation being generated. For instance, the entity A may send to the entity B one or more values (e.g., a salt, an initialization vector, etc.) to be used by the entity B in generating an attribute attestation. Additionally, or alternatively, the entity B may send to the entity A one or more values (e.g., a salt, an initialization vector, etc.) to be used by the entity A in generating an attribute attestation.

At act 128, the data management service 110A may send, to the data management service 110B, at least one distributed ledger reference for attestation of the one or more attribute values. This may be done via the secure channel and/or the distributed ledger, for example, as described above in connection with sharing of the one or more attribute values at act 122.

In some embodiments, the illustrative distributed ledger client 115A in the example of FIG. 1B may be implemented using a smart contract, and the at least one distributed ledger reference sent at act 128 may include a reference to a distributed ledger transaction whereby the smart contract is recorded on the distributed ledger.

In some embodiments, the at least one distributed ledger reference sent at act 128 may include a distributed ledger reference to a badge published by the entity A, such as a reference to a distributed ledger transaction whereby a badge is recorded on the distributed ledger. The badge may store the one or more attribute attestations generated at acts 124A and/or 124B. Additionally, or alternatively, the badge may store an indication that the entity A has shared the one or more attribute values with the entity B. Thus, the badge may evidence a relationship between the entities A and B (e.g., that the entity B is a trusted entity that has verified or issued the one or more attribute values, or that the entity B is a service provider that has accepted the one or more attribute values). However, it should be appreciated that aspects of the present disclosure are not limited to using a badge in any particular manner, or at all. In some embodiments, the at least one distributed ledger reference sent at act 128 may include a distributed ledger reference to an attribute attestation directly.

A badge may be published to the distributed ledger in any suitable manner. For instance, the data management service 110A may store the badge in the illustrative distributed ledger state 105A in the example of FIG. 1B. In response, the illustrative distributed ledger client 115A may propagate the badge to the illustrative distributed ledger client 115B via a distributed ledger synchronization protocol. The distributed ledger client 115B may perform one or more checks, such as checking that the badge is properly constructed according to a selected specification, that the entity A is authorized to publish the badge, etc. If the one or more checks pass, the distributed ledger client 115B may update the illustrative distributed ledger state 105B to include the badge.

In some embodiments, an attribute attestation may be published to the distributed ledger when a badge is published. For instance, the entity A may publish a badge with one or more attribute attestations assembled therein. This is shown as act 130A in the example of FIG. 1C. The entity A may then, at act 128, send to the entity B a distributed ledger reference to the badge.

However, it should be appreciated that aspects of the present disclosure are not limited to publishing an attribute attestation when a badge is published. Additionally, or alternatively, the entity A and/or the entity B may publish one or more attribute attestations to a badge already published by the entity A. For instance, the entity B may use a distributed ledger reference received from the entity A at act 128 to publish one or more attribute attestations. This is shown as act 130B in the example of FIG. 1C.

An attribute attestation may be published to the distributed ledger in any suitable manner. For instance, the data management service 110A (or the data management service 110B, respectively) may store one or more attribute attestations in the illustrative distributed ledger state 105A (or the illustrative distributed ledger state 105B, respectively) in the example of FIG. 1B. In response, the distributed ledger client 115A (or the distributed ledger client 115B, respectively) may propagate the one or more attribute attestations to the distributed ledger client 115B (or the distributed ledger client 115A, respectively) via a distributed ledger synchronization protocol. The distributed ledger client 115B (or the distributed ledger client 115A, respectively) may perform one or more checks, such as checking that the one or more attribute attestations are properly constructed according to a selected specification, that the entity A (or the entity B, respectively) is authorized to publish the one or more attribute attestations, etc. If the one or more checks pass, the distributed ledger client 115B (or the distributed ledger client 115A, respectively) may update the distributed ledger state 105B (or the distributed ledger state 105A, respectively) to include the one or more attribute attestations.

As described above, an attribute attestation may, in some embodiments, include metadata indicating that the attribute attestation is to be checked and/or accepted by a selected entity. As one example, the entity B may be a trusted entity that verifies attribute values received from the entity A, and an attribute attestation published by the entity A may include metadata indicating that the attribute attestation is to be checked and/or accepted by the entity B. Publication of the attribute attestation may indicate that the entity A has shared a corresponding attribute value with the entity B, whereas acceptance of the attribute attestation may indicate that the entity B has verified the attribute value and checked the attribute attestation.

As another example, the entity B may be a trusted entity that verifies attribute values received from the entity A, and an attribute attestation published by the entity B may include metadata indicating that the attribute attestation is to be checked and/or accepted by the entity A. Publication of the attribute attestation may indicate that the entity B has verified a corresponding attribute value, whereas acceptance of the attribute attestation may indicate that the entity A has checked the attribute attestation.

As another example, the entity B may be a trusted entity that issues attribute values to the entity A, and an attribute attestation published by the entity B may include metadata indicating that the attribute attestation is to be checked and/or accepted by the entity A. Publication of the attribute attestation may indicate that the entity B has issued a corresponding attribute value, whereas acceptance of the attribute attestation may indicate that the entity A agrees with the attribute value, and has checked the attribute attestation.

As another example, the entity B may be a service provider that requests attribute values from the entity A, and an attribute attestation published by the entity A may include metadata indicating that the attribute attestation is to be checked and/or accepted by the entity B. Publication of the attribute attestation may indicate that the entity A has shared a corresponding attribute value with the entity B, whereas acceptance of the attribute attestation may indicate that the entity B has accepted the attribute value and checked the attribute attestation.

In some embodiments, the entity A may access, from the distributed ledger state 105A, an attribute attestation published by the entity B. This is shown as act 132A in the example of FIG. 1C. For instance, the entity A may look up the attribute attestation using the at least one distributed ledger reference sent to the entity B at act 128.

Additionally, or alternatively, the entity B may access, from the distributed ledger state 105B, an attribute attestation published by the entity A. This is shown as act 132B in the example of FIG. 1C. For instance, the entity B may look up the attribute attestation using the at least one distributed ledger reference received from the entity A at act 128.

In some embodiments, the entity A (or the entity B, respectively) may check the attribute attestation, for example, by checking that a cryptographic proof in the attribute attestation is generated from a corresponding attribute value sent to, or received from, the entity B (or the entity A, respectively) at act 122. This check may be performed based on a cryptographic scheme indicated by metadata in the attribute attestation.

In some embodiments, if the attribute attestation is successfully checked, the entity A (or the entity B, respectively) may accept the attribute attestation, for example, by signing the attribute attestation using a private key associated with the entity A (or the entity B, respectively). The signature may be published to the distributed ledger, for example, as described above in connection with publishing the attribute attestation at act 130A (or act 130B, respectively).

Any suitable electronic signature scheme may be used, as aspects of the present disclosure are not so limited. In some embodiments, the entity A (or the entity B, respectively) may have an associated distributed ledger address, and a private key associated with that distributed ledger address may be managed by the illustrative distributed ledger client 115A (or the illustrative distributed ledger client 115B, respectively) in the example of FIG. 1B. The data management service 110A (or the data management service 110B, respectively) may cause the distributed ledger client 115A (or the distributed ledger client 115B, respectively) to use the private key to generate a signature over the attribute attestation. In this manner, a third entity may use the distributed ledger address of the entity A (or the entity B, respectively) to look up a public key from the distributed ledger, and may use that public key to check the signature over the attribute attestation.

Although some details of implementation are described above in connection with FIG. 1C, it should be appreciated that such details are provided solely for purposes of illustration. Aspects of the present disclosure are not limited to any particular manner of implementation.

For instance, in some embodiments, a communication via a secure channel may be authenticated using a distributed ledger key pair. As one example, the entity A (or the entity B, respectively) may have an associated distributed ledger address, and may use a private key associated with that distributed ledger address to sign a distributed ledger transaction whereby a badge and/or one or more attribute attestations are published by the entity A (or the entity B, respectively). The entity A (or the entity B, respectively) may use the same private key to generate a signature over an attribute value sent to the entity B (or the entity A, respectively) via a secure channel. Upon receiving the attribute value and the signature, the entity B (or the entity A, respectively) may use a distributed ledger address associated with the badge and/or the one or more attribute attestations to look up a public key from the distributed ledger, and may use that public key to check that both the attribute value and the distributed ledger transaction have been signed using the same private key. In this manner, the attribute value transmitted via the secure channel may be bound to the distributed ledger transaction whereby the badge and/or the one or more attribute attestations are published.

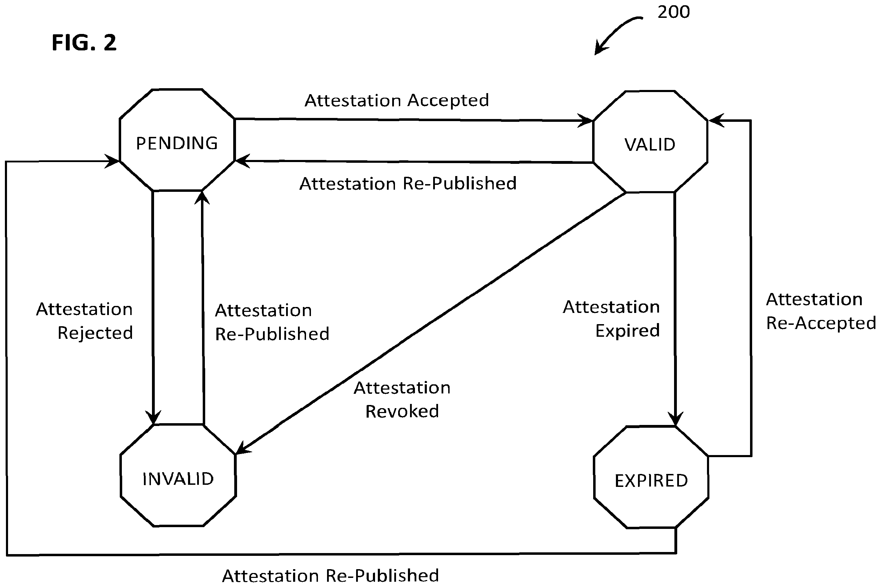

FIG. 2 shows an illustrative state machine 200 that describes transitions among different states of an attribute attestation, in accordance with some embodiments. For instance, the state machine 200 may describe state transitions of an attribute attestation published to a distributed ledger (e.g., as represented by the illustrative distributed ledger states 105A-B in the example of FIG. 1A). Such state transitions may be managed via the distributed ledger. For example, the attribute attestation may be stored in the distributed ledger in association with state information, which may be updated via distributed ledger transactions.

In some embodiments, when the attribute attestation is first published, the attribute attestation may be initialized to a PENDING state in the distributed ledger. In this state, the attribute attestation may be neither valid nor invalid.

In some embodiments, the attribute attestation may be published with an indication that the attribute attestation is to be checked and/or accepted by a selected entity. For instance, the attribute attestation may include a distributed ledger address and/or a public key associated with the selected entity.

In some embodiments, the selected entity may cause the attribute attestation to transition from the PENDING state to a VALID state by initiating a distributed ledger transaction accepting the attribute attestation, where the distributed ledger transaction may be signed using a private key corresponding to the distributed ledger address and/or the public key indicated in the attribute attestation.

In some embodiments, a distributed ledger client (e.g., the illustrative distributed ledger client 115A and/or the illustrative distributed ledger client 115B in the example of FIG. 1B) may check the distributed ledger transaction accepting the attribute attestation. For example, the distributed ledger client may use a public key indicated in the attribute attestation to check that the distributed ledger transaction has been signed with a corresponding private key. Additionally, or alternatively, the distributed ledger client may look up a public key associated with a distributed ledger address indicated in the attribute attestation, and may use that public key to check that the distributed ledger transaction has been signed using a private key associated with the distributed ledger address indicated in the attribute attestation. If the distributed ledger transaction is successfully checked, the distributed ledger client may update the state information associated with the attribute attestation from PENDING to VALID.

In some embodiments, the selected entity may cause the attribute attestation to transition from the PENDING state to an INVALID state via a distributed ledger transaction rejecting the attribute attestation. Additionally, or alternatively, the selected entity may cause the attribute attestation to transition from the VALID state to the INVALID state via a distributed ledger transaction revoking the attribute attestation. The distributed ledger transaction rejecting/revoking the attribute attestation may be signed and/or checked, for example, as described above in connection with accepting the attribute attestation.

In some embodiments, the attribute attestation may move from the VALID state to an EXPIRED state when a validity period indicated in the attribute attestation expires. For instance, when an entity requests access to the attribute attestation, a distributed ledger client may check if the validity period has expired. If so, the distributed ledger client may update the state information associated with the attribute attestation from VALID to EXPIRED, and may notify the requesting entity accordingly. Additionally, or alternatively, the distributed ledger client may notify the selected entity responsible for checking and/or accepting the attribute attestation.

In some embodiments, the attribute attestation may move from the EXPIRED state back to the VALID state. For instance, the selected entity responsible for checking and/or accepting the attribute attestation may initiate a distributed ledger transaction re-accepting the attribute attestation. The distributed ledger transaction re-accepting the attribute attestation may be signed and/or checked, for example, as described above in connection with accepting the attribute attestation.

In some embodiments, the attribute attestation may move back to the PENDING state from the VALID state, the EXPIRED state, or the INVALID state. For instance, an entity that published the attribute attestation may initiate a distributed ledger transaction re-publishing the attribute attestation, and may sign that distributed ledger transaction using a same private key that was used to sign a distributed ledger transaction via which the attribute attestation was first published. A distributed ledger client may check that both distributed ledger transactions are associated with a same public key, and may use that public key to check the signature on the distributed ledger transaction re-publishing the attribute attestation. If these checks are successful, the distributed ledger client may update the state information associated with the attribute attestation to PENDING.

In some embodiments, the attribute attestation may be published by an attribute owner, and the selected entity checking the attribute attestation may be a trusted entity that verifies a corresponding attribute value received from the attribute owner.

○ If the trusted entity successfully verifies the attribute value (e.g., by physically examining documentation, biometric measurements, etc.) and successfully checks the attribute attestation (e.g., by checking a cryptographic proof in the attribute attestation), the trusted entity may cause the attribute attestation to move from the PENDING state to the VALID state in the distributed ledger. Otherwise, the trusted entity may cause the attribute attestation to move from the PENDING state to the INVALID state in the distributed ledger.

○ If the attribute attestation expires, the trusted entity may re-verify the attribute value (e.g., by physically examining updated documentation, biometric measurements, etc.). If successful, the trusted entity may cause the attribute attestation to move from the EXPIRED state back to the VALID state in the distributed ledger.

○ The trusted entity may cause the attribute attestation to move from the VALID state to the REVOKED state for any suitable reason (e.g., change in attribute verification criteria, receipt of information indicating the attribute value is no longer correct, etc.).

○ The attribute owner may cause the attribute attestation to move back to the PENDING state from the VALID state, the EXPIRED state, or the INVALID state. For example, the attribute owner may send a new attribute value to the trusted entity, and re-publish the attribute attestation with a cryptographic proof of the new attribute value. The attribute owner may request that the trusted entity verify the new attribute value and check the newly published cryptographic proof.

Additionally, or alternatively, the attribute attestation may be published by a trusted entity that verifies a corresponding attribute value received from an attribute owner, and the selected entity checking the attribute attestation may be the attribute owner.

○ If the attribute owner successfully checks the attribute attestation (e.g., by checking a cryptographic proof in the attribute attestation), the attribute owner may cause the attribute attestation to move from the PENDING state to the VALID state in the distributed ledger. Otherwise, the attribute owner may cause the attribute attestation to move from the PENDING state to the INVALID state in the distributed ledger.

○ The trusted entity may cause the attribute attestation to move from the VALID state to the REVOKED state for any suitable reason (e.g., change in attribute verification criteria, receipt of information indicating the attribute value is no longer correct, etc.).

○ The attribute owner may cause the attribute attestation to move back to the PENDING state from the VALID state, the EXPIRED state, or the INVALID state. For example, the attribute owner may send a new attribute value to the trusted entity, and may request that the trusted entity verify the new attribute value and re-publish the attribute attestation with a cryptographic proof of the new attribute value.

Additionally, or alternatively, the attribute attestation may be published by a trusted entity that issues a corresponding attribute value to an attribute owner, and the selected entity checking the attribute attestation may be the attribute owner.

    ◦ If the attribute owner agrees with the attribute value and successfully checks the attribute attestation (e.g., by checking a cryptographic proof in the attribute attestation), the attribute owner may cause the attribute attestation to move from the PENDING state to the VALID state in the distributed ledger. Otherwise, the attribute owner may cause the attribute attestation to move from the PENDING state to the INVALID state in the distributed ledger.
    ◦ The trusted entity may cause the attribute attestation to move from the VALID state to the REVOKED state for any suitable reason (e.g., change in attribute issuance criteria, receipt of information indicating the attribute value is no longer correct, etc.).
    ◦ The trusted entity may cause the attribute attestation to move back to the PENDING state from the VALID state, the EXPIRED state, or the INVALID state. For example, the trusted entity may issue a new attribute value, and may re-publish the attribute attestation with a cryptographic proof of the new attribute value.

Additionally, or alternatively, the attribute attestation may be published by an attribute owner, and the selected entity checking the attribute attestation may be a service provider that requests a corresponding attribute value from the attribute owner.

    ◦ If the service provider accepts the attribute value and successfully checks the attribute attestation (e.g., by checking a cryptographic proof in the attribute attestation), the service provider may cause the attribute attestation to move from the PENDING state to the VALID state in the distributed ledger. Otherwise, the service provider may cause the attribute attestation to move from the PENDING state to the INVALID state in the distributed ledger.
    ◦ The service provider may cause the attribute attestation to move from the VALID state to the REVOKED state for any suitable reason (e.g., change in attribute acceptance criteria, receipt of information indicating the attribute value is no longer correct, etc.).
    ◦ The attribute owner may cause the attribute attestation to move back to the PENDING state from the VALID state, the EXPIRED state, or the INVALID state. For example, the attribute owner may send a new attribute value to the service provider, and re-publish the attribute attestation with a cryptographic proof of the new attribute value. The attribute owner may request that the trusted entity accept the new attribute value and check the newly published cryptographic proof.

It should be appreciated that the state machine 200 is shown in FIG. 2 and described above solely for purposes of illustration, as aspects of the present disclosure are not limited to maintaining states of an attribute attestation in any particular manner, or to maintaining such states at all. In some embodiments, a state label may be stored in a designated data structure, and a state transition may be effectuated by replacing an existing state label with a new state label. Additionally, or alternatively, a state transition may be effectuated by creating a new data structure with a new state label stored therein. The new data structure may be designated as indicating a current state, and may include a reference to one or more previous data structures with previous state labels stored therein.

In some embodiments, a distributed ledger client (e.g., the illustrative distributed ledger client 115A or 115B in the example of FIG. 1B) may be implemented using a smart contract (e.g., an Ethereum smart contract), which may be programmed to maintain states of attribute attestations. However, it should be appreciated that aspects of the present disclosure are not limited to using any particular type of smart contract, or any smart contract at all.

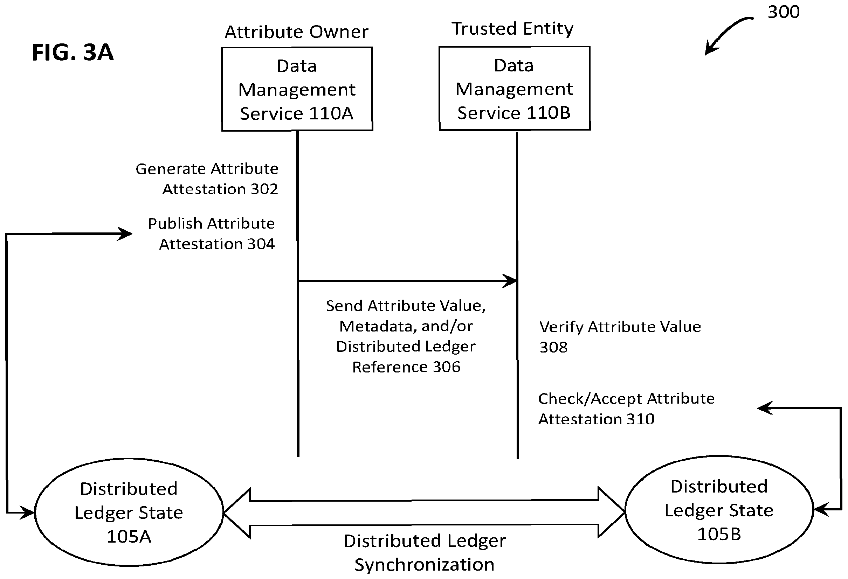

FIG. 3A shows an illustrative process 300 for attribute attestation by a trusted entity, in accordance with some embodiments. For instance, the process 300 may be performed between the illustrative entities A and B in the example of FIG. 1A. The entity A may be an attribute owner who uses the illustrative data management service 110A to manage attribute values. The entity B may be a trusted entity (e.g., a government agency, an employer, a bank, a university, a healthcare provider, a utility company, etc.) that verifies one or more attribute values of the entity A, and uses the illustrative data management service 110B to attest to the one or more attribute values.

At act 302, the data management service 110A may generate one or more attribute attestations. For instance, the data management service 110A may select one or more attribute values to be verified by the entity B, and may generate an attestation for each selected attribute value (e.g., as described above in connection with act 124A in the example of FIG. 1C).

In some embodiments, the data management service 110A may organize the one or more attribute attestations into a badge. Additionally, or alternatively, the data management service 110A may include in the badge an indication that the badge is to be presented to a third entity (e.g., a service provider from which the entity A is requesting a service). However, it should be appreciated that aspects of the present disclosure are not limited to generating a badge in any particular manner, or at all.

At act 304, the data management service 110A may cause the one or more attribute attestations to be published to a distributed ledger (e.g., as described above in connection with act 130A in the example of FIG. 1C). In some embodiments, each attribute attestation may have an associated state, which may be set to PENDING upon publication of the attribute attestation (e.g., as described above in connection with the example of FIG. 2).

At act 306, the data management service 110A may send the one or more selected attribute values to the data management service 110B (e.g., as described above in connection with act 122 in the example of FIG. 1C). In some embodiments, the data management service 110A may also send relevant metadata (e.g., as described above in connection with act 126 in the example of FIG. 1C).

Additionally, or alternatively, the data management service 110A may send a distributed ledger reference to the data management service 110B (e.g., as described above in connection with act 128 in the example of FIG. 1C). As described below in connection with act 310, the data management service 110B may use this distributed ledger reference to look up the one or more attribute attestations from the distributed ledger.

At act 308, the data management service 110B may cause a received attribute value to be verified directly, for example, by physically examining documentation (e.g., passport, credit card, utility statement, paystub, academic transcript, health record, etc.) and/or biometric measurements (e.g., fingerprint, iris scan, voiceprint, etc.).

Additionally, or alternatively, the data management service 110B may verify a received attribute value indirectly, for example, based on a referenced attestation. For instance, in some embodiments, entities may form a trust structure, in which an entity may trust one or more other entities, and may rely upon attribute attestations accepted by any of the one or more other entities. In this manner, an entity may be able to verify an attribute value without performing a physical verification.

Accordingly, in some embodiments, the data management service 110A may provide, to the data management service 110B, a distributed ledger reference to an attribute attestation previously accepted by another entity. The referenced attribute attestation may be for the same attribute value being verified by the data management service 110B. The data management service 110B may look up the referenced attribute attestation from the distributed ledger, and may perform one or more checks. For instance, the data management service 110B may check that:

(i) an entity that signed the referenced attribute attestation is trusted by the entity B (e.g., by looking up a list of trusted entities);
(ii) a cryptographic proof in the referenced attribute attestation is generated from the attribute value received from the entity A, and is generated using a cryptographic scheme indicated in the referenced attribute attestation;
(iii) the referenced attribute attestation is in a VALID state in the distributed ledger; and/or
(iv) the referenced attribute attestation is signed using a private key associated with the trusted entity (e.g., a private key associated with a distributed ledger address of the trusted entity).

In some embodiments, the data management service 110B may check (iv) by looking up a public key of the trusted entity (e.g., a public key associated with a distributed ledger address of the trusted entity), and using the public key to check a signature of the referenced attribute attestation.

In some embodiments, if a received attribute value is successfully verified (directly or indirectly), the data management service 110B may, at act 310, use a distributed ledger reference received at act 306 to look up a corresponding attribute attestation from the distributed ledger. The data management service 110B may check and/or accept the attribute attestation (e.g., as described above in connection with act 132B in the example of FIG. 1C). Additionally, or alternatively, the data management service 110B may cause a state of the attribute attestation to be changed to VALID in the distributed ledger (e.g., as described above in connection with the example of FIG. 2).

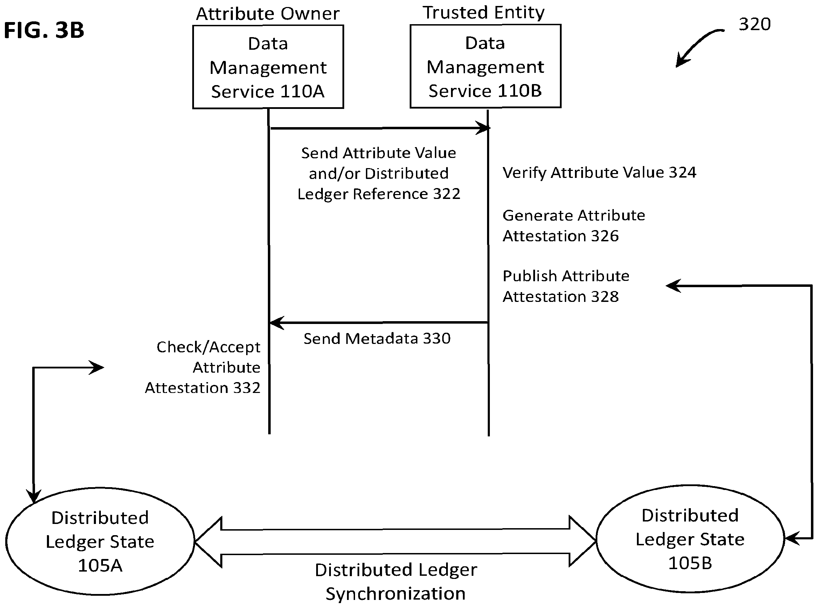

FIG. 3B shows another illustrative process 320 for attribute attestation by a trusted entity, in accordance with some embodiments. The process 320 may be similar to the illustrative process 300 in the example of FIG. 3A, except that one or more attribute attestations may be generated and/or published by a trusted entity (e.g., the illustrative entity B in the example of FIG. 1A, via the illustrative data management service 110B in the example of FIG. 1B), as opposed to an attribute owner (e.g., the illustrative entity A in the example of FIG. 1A, via the illustrative data management service 110A in the example of FIG. 1B).

At act 322, the data management service 110A may send one or more selected attribute values to the data management service 110B (e.g., as described above in connection with act 122 in the example of FIG. 1C).

Additionally, or alternatively, the data management service 110A may send a distributed ledger reference to the data management service 110B (e.g., as described above in connection with act 128 in the example of FIG. 1C). As described below in connection with act 328, the data management service 110B may use this distributed ledger reference to publish one or more attribute attestations to the distributed ledger.

At act 324, the data management service 110B may cause a received attribute value to be verified directly or indirectly (e.g., as described above in connection with act 308 in the example of FIG. 3A). If the received attribute value is successfully verified, the data management service 110B may, at act 326, generate a corresponding attribute attestation (e.g., as described above in connection with act 124B in the example of FIG. 1C).

At act 328, the data management service 110B may use the distributed ledger reference received at act 322 to publish one or more attribute attestations to the distributed ledger (e.g., as described above in connection with act 130B in the example of FIG. 1C). In some embodiments, each attribute attestation may have an associated state, which may be set to PENDING upon publication of the attribute attestation (e.g., as described above in connection with the example of FIG. 2).

In some embodiments, the data management service 110B may, at act 330, send relevant metadata (e.g., as described above in connection with act 126 in the example of FIG. 1C).

In some embodiments, the data management service 110A may, at act 310, use the distributed ledger reference sent at act 322 to look up an attribute attestation from the distributed ledger. The data management service 110A may check and/or accept the attribute attestation (e.g., as described above in connection with act 132A in the example of FIG. 1C). Additionally, or alternatively, the data management service 110A may cause a state of the attribute attestation to be changed to VALID in the distributed ledger (e.g., as described above in connection with the example of FIG. 2).

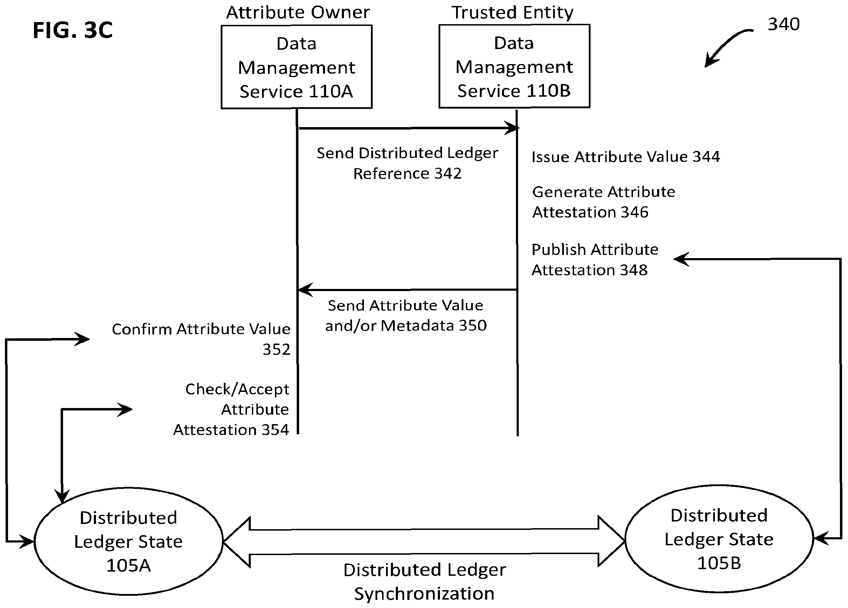

FIG. 3C shows an illustrative process 340 for attribute issuance by a trusted entity, in accordance with some embodiments. The process 340 may be similar to the illustrative process 300 in the example of FIG. 3A, except that one or more attribute values may be issued by a trusted entity (e.g., the illustrative entity B in the example of FIG. 1A, via the illustrative data management service 110B in the example of FIG. 1B), as opposed to being sent to the trusted entity by an attribute owner (e.g., the illustrative entity A in the example of FIG. 1A, via the illustrative data management service 110A in the example of FIG. 1B).

At act 342, the data management service 110A may send a distributed ledger reference to the data management service 110B (e.g., as described above in connection with act 128 in the example of FIG. 1C). As described below in connection with act 348, the data management service 110B may use this distributed ledger reference to publish one or more attribute attestations to the distributed ledger.

It should be appreciated that aspects of the present disclosure are not limited to the data management service 110A sending a distributed ledger reference to the data management service 110B. In some embodiments, a distributed ledger reference may be sent from the data management service 110B to the data management service 110A. For instance, the distributed ledger reference may point to a badge newly created by the entity B for the entity A. However, aspects of the present disclosure are not limited to creating a badge in any particular manner, or at all.

At act 344, the data management service 110B may issue one or more attribute values. For instance, the data management services 110A-B may each provide an application programming interface to a respective application (not shown). The entity A's application may send a request to the entity B's application for one or more selected attributes (e.g., a passport number, an annual salary, an account balance, a credit score, etc.). In response, the entity B's application may create one or more values for the one or more requested attributes, and may invoke the data management service 110B with the one or more attribute values.

At act 346, the data management service 110B may generate an attribute attestation (e.g., as described above in connection with act 124B in the example of FIG. 1C) for an attribute value issued at act 344.

At act 348, the data management service 110B may use the distributed ledger reference received at act 342 to publish one or more attribute attestations to the distributed ledger (e.g., as described above in connection with act 130B in the example of FIG. 1C). In some embodiments, each attribute attestation may have an associated state, which may be set to PENDING upon publication of the attribute attestation (e.g., as described above in connection with the example of FIG. 2).

In some embodiments, the data management service 110B may, at act 350, send one or more attribute values issued at act 344 to the data management service 110A (e.g., as described above in connection with act 122 in the example of FIG. 1C). Additionally, or alternatively, the data management service 110B may send relevant metadata (e.g., as described above in connection with act 126 in the example of FIG. 1C).

At act 352, the data management service 110A may cause a received attribute value to be confirmed. For instance, the entity A may be prompted to review the attribute value. Additionally, or alternatively, the data management service 110A may verify whether the attribute value is consistent with one or more other attribute values in a data collection of the entity A (the illustrative data collection 100A in the example of FIG. 1A).

In some embodiments, the data management service 110A may, at act 354, use the distributed ledger reference sent at act 342 to look up an attribute attestation from the distributed ledger. The data management service 110A may check and/or accept the attribute attestation (e.g., as described above in connection with act 132A in the example of FIG. 1C). Additionally, or alternatively, the data management service 110A may cause a state of the attribute attestation to be changed to VALID in the distributed ledger (e.g., as described above in connection with the example of FIG. 2).

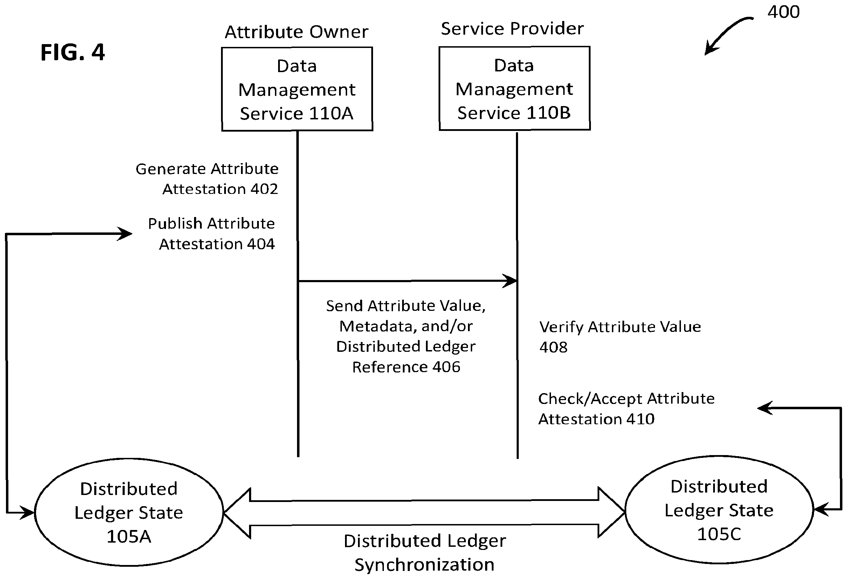

FIG. 4 shows an illustrative process 400 for attribute acceptance by a service provider, in accordance with some embodiments. The process 400 may be similar to the illustrative process 300 in the example of FIG. 3A, except that the entity B may be a service provider (e.g., a bank), as opposed to a trusted entity that directly verifies and/or issues attribute values. Before the entity B provides a service to the entity A (e.g., opening a bank account), the entity B may request that the entity A submit one or more attribute values (e.g., pursuant to know-your-customer and/or anti-money-laundering regulations) that have been issued and/or verified by a trusted entity.

In some embodiments, the process 400 may be triggered when the entity A begins an interaction with the entity B. For instance, the data management services 110A and 110B may each provide an application programming interface to a respective application (not shown). The entity A's application may send a service request to the entity B's application. In response, the entity B's application may indicate one or more selected attributes, and may request that the entity A submit one or more corresponding attribute values that have been attested to by a trusted entity.

Accordingly, the entity A may request that the trusted entity verify one or more values for one or more attributes indicated by the entity B. The trusted entity may publish and/or accept one or more corresponding attribute attestations in a distrusted ledger. This may be done, for example, via the illustrative process 300 in the example of FIG. 3A and/or the illustrative process 320 in the example of FIG. 3B. Additionally, or alternatively, the entity A may request that a trusted entity issue one or more values for one or more attributes indicated by the entity B. The trusted entity may publish one or more corresponding attribute attestations to the distributed ledger, and the entity A may accept the one or more attribute attestations. This may be done, for example, via the illustrative process 340 in the example of FIG. 3C.

Returning to FIG. 4, the data management service 110A may, at act 402, generate one or more additional attribute attestations for the one or more attribute values (e.g., as described above in connection with act 124A in the example of FIG. 1C). The additional attribute attestations may be different from the attribute attestations published and/or accepted by the trusted entity. For instance, different randomly generated salts may be used to generate different cryptographic proofs on a same attribute value.

In some embodiments, the data management service 110A may organize the one or more additional attribute attestations into a badge. Additionally, or alternatively, the data management service 110A may include in the badge an indication that the badge is to be presented to the entity B. However, it should be appreciated that aspects of the present disclosure are not limited to generating a badge in any particular manner, or at all.

At act 404, the data management service 110A may cause the one or more additional attribute attestations to be published to the distributed ledger (e.g., as described above in connection with act 130A in the example of FIG. 1C). In some embodiments, each additional attribute attestation may have an associated state, which may be set to PENDING upon publication of the additional attribute attestation (e.g., as described above in connection with the example of FIG. 2).

At act 406, the data management service 110A may send the one or more requested attribute values to the data management service 110B (e.g., as described above in connection with act 122 in the example of FIG. 1C). In some embodiments, the data management service 110A may also send relevant metadata (e.g., as described above in connection with act 126 in the example of FIG. 1C).

Additionally, or alternatively, the data management service 110A may send a distributed ledger reference to the data management service 110B (e.g., as described above in connection with act 128 in the example of FIG. 1C). As described below in connection with act 410, the data management service 110B may use this distributed ledger reference to look up the one or more additional attribute attestations from the distributed ledger.

At act 408, the data management service 110B may cause a received attribute value to be verified indirectly. For instance, each additional attribute attestation may include a reference to the attribute attestation published and/or accepted by the trusted entity for the same attribute value. The data management service 110B may look up the referenced attribute attestation from the distributed ledger, and may perform one or more checks.

For instance, the data management service 110B may check that:

(i) the entity that published and/or accepted the referenced attribute attestation is trusted by the entity B (e.g., by looking up a list of trusted entities);
(ii) the corresponding attribute value has been verified by the trusted entity using a procedure that is acceptable to the entity B (e.g., physical examination of at least two forms of government-issued photo identification);
(iii) a cryptographic proof in the referenced attribute attestation is generated from the attribute value received from the entity A, and is generated using a cryptographic scheme indicated in the referenced attribute attestation;
(iv) the referenced attribute attestation is in a VALID state in the distributed ledger; and/or
(v) the referenced attribute attestation is signed using a private key associated with the trusted entity (e.g., a private key associated with a distributed ledger address of the trusted entity).

In some embodiments, the data management service 110B may check (iv) by looking up a public key of the trusted entity (e.g., a public key associated with a distributed ledger address of the trusted entity), and using the public key to check a signature of the referenced attribute attestation.

Additionally, or alternatively, the entity B may apply one or more rules to the received attribute value. As one example, the received attribute value may be a jurisdiction of residence of the entity A, and the entity B may check if the jurisdiction is on a list of sanctioned jurisdictions. As another example, the received attribute value may be a current balance of an account of the entity A, and the entity B may check if the balance is above a selected threshold (e.g., a minimum required balance plus a proposed amount for an out-going transfer).

In some embodiments, if a received attribute value is successfully verified (indirectly) and/or accepted by the entity B, the data management service 110B may, at act 410, use a distributed ledger reference received at act 406 to look up a corresponding additional attribute attestation from the distributed ledger. The data management service 110B may check and/or accept the additional attribute attestation (e.g., as described above in connection with act 132B in the example of FIG. 1C). Additionally, or alternatively, the data management service 110B may cause a state of the additional attribute attestation to be changed to VALID in the distributed ledger (e.g., as described above in connection with the example of FIG. 2).

In some embodiments, the data management service 110B may provide an indication of a successful or failed check to the entity B's application (not shown), along with the one or more attribute values received from the entity A. The entity B's application may perform additional checks on the one or more attribute values (e.g., pursuant to know-your-customer and/or anti-money-laundering regulations), and may notify the entity A's application (not shown) accordingly.

Although some details of implementation are described above in connection with FIGs. 3A-C and FIG. 4, it should be appreciated that such details are provided solely for purposes of illustration. Aspects of the present disclosure are not limited to any particular manner of implementation. For instance, in some embodiments, the data management service 110B may, at act 410, simply check a referenced attribute attestation published and/or accepted by a trusted entity. The data management service 110A may not generate any additional attribute attestation to be checked and/or accepted by the data management service 110B.

Moreover, in some embodiments, an entity may have multiple roles in a data management system. For instance, when a user applies for a line of credit from a bank, the bank may be a service provider that checks one or more attribute attestations signed by a trusted entity in a distributed ledger (e.g., via the illustrative process 400 in the example of FIG. 4). Subsequently, when the user draws from the line of credit, the bank may issue monthly statements listing the user's transactions, balance owed, available credit, etc. The bank may generate attribute attestations of such statements and/or information listed therein, and may publish the attribute attestations to the distributed ledger (e.g., via the illustrative process 340 in the example of FIG. 3C).

The inventors have recognized and appreciated that a data management system may be used to provide a custodial key service for managing cryptographic keys of digital assets. Examples of digital assets include, but are not limited to, crypto currencies and tokens. Such digital assets may be accessed using corresponding cryptographic keys (e.g., a private key in a key pair generated according to an asymmetric cryptosystem).

In some embodiments, a custodial key service may store a cryptographic key of a digital asset for an owner of the digital asset. If the asset owner wishes to transfer the digital asset to an asset recipient, the asset owner may submit a transfer request to the custodial key service. Upon receiving a transfer request concerning a digital asset, the custodial key service may check an identity of an entity from which the transfer request is received to confirm that the entity is indeed an owner of the digital asset. Additionally, or alternatively, the custodial key service may check an identity of an asset recipient indicated in the transfer request. Once the transfer request is checked, the custodial key service may use the cryptographic key of the digital asset to sign the transfer request. In this manner, the asset owner may authorize the transfer without directly handling the cryptographic key.

In some embodiments, a digital asset may be associated with multiple cryptographic keys. For instance, a digital asset may be associated with $M$ different keys, where at least $N$ of the $M$ keys ($N \leq M$) may be needed to access the digital asset. Accordingly, in some embodiments, multiple custodial key services may be provided, each storing one of the $M$ cryptographic keys of the digital asset. As one example, there may be $M$ custodial key services. As another example, there may be $M$ - 1 custodial key services, while an owner of the digital asset may hold one of the $M$ keys. If the threshold $N$ is set to be $M$ (i.e., $N = M$), authorization by the asset owner, as well as all of the $M$ - 1 custodial key services, may be needed to effectuate a transfer.

In some embodiments, if an asset owner wishes to transfer a digital asset to an asset recipient, the asset owner may submit a transfer request to at least $N$ custodial key services. In this manner, a hacker may be unable to perform an unauthorized transfer unless the hacker successfully compromises at least $N$ custodial key services, resulting in improved security of the digital asset. Also, by selecting a threshold $N$ that is strictly less than $M$, redundancy may be provided, so that $N$ signatures may be possible even if one or more custodial key services become unavailable (e.g., due to network failure). However, it should be appreciated that aspects of the present disclosure are not limited to having multiple custodial key services, nor to having any particular threshold. In some embodiments, there may be just one custodial key service. Additionally, or alternatively, there may be two keys, one held by the asset owner and the other held by the custodial key service. The threshold $N$ may be set to 1, so that either entity may effectuate a transfer.

The inventors have further recognized and appreciated that a custodial key service may be used to check compliance of one or more transfer restrictions. For instance, in addition to, or instead of, checking an identity of an asset owner and/or an identity of an asset recipient, a custodial key service may check a blacklist and/or a whitelist to confirm that the proposed transfer should be allowed to proceed. For example, the blacklist (or the whitelist, respectively) may indicate owners, recipients, and/or specific assets for which transfers are prohibited (or allowed, respectively). Additionally, or alternatively, the custodial key service may perform one or more checks according to one or more government and/or other regulations to confirm that the proposed transfer is in compliance. Examples of regulations include, but are not limited to, anti-money-laundering and combating the financing of terrorism (AML/CFT) regulations.

For instance, the Financial Crimes Enforcement Network (FinCEN) of the U.S. Department of Treasury recently issued a notice of proposed rulemaking to require banks and money service businesses (MSBs) to submit reports, keep records, and verify identities of customers in relation to transactions involving convertible virtual currency (CVC) or digital assets with legal tender status (LTDA) held in unhosted wallets, or held in wallets hosted in a jurisdiction identified by FinCEN (e.g., a jurisdiction of primary money laundering concern).[1] [1] See https://www.govinfo.gov/content/pkg/FR-2020-12-23/pdf/2020-28437.pdf. As an example, under a proposed reporting provision, banks and MSBs are required to file reports for certain transactions between their customers' CVC or LTDA hosted wallets and unhosted or otherwise covered wallets, either as senders or recipients.[2] [2] Id., Section V.B. A single transaction above a threshold of $10,000 in value, or multiple transactions within a 24-hour period that are by or on behalf of a same person and have an aggregate value-in or value-out above the threshold, may trigger the reporting requirement. Such a report may be required to include information on a bank or MSB filing the report, the transaction(s) triggering the reporting requirement, a hosted wallet customer of the bank or MSB involved in the transactions(s), and each counterparty (e.g., at a minimum, name and physical address of each counterparty).

As another example, under a first proposed identity verification and recordkeeping provision, banks and MSBs are required to keep records and verify identities of their hosted wallet customers who engage in transactions with unhosted or otherwise covered wallet counterparties.[3] [3] See https://www.govinfo.gov/content/pkg/FR-2020-12-23/pdf/2020-28437.pdf. Section V.C. As another example, under a second proposed identity verification and recordkeeping provision, banks and MSBs are required to keep records and verify identities of their customers engaging in transactions involving withdrawal, exchange, or other payment or transfer by, through, or to such financial institution of CVC or LTDA with a value of more than $3,000.[4] [4] See https://www.govinfo.gov/content/pkg/FR-2020-12-23/pdf/2020-28437.pdf, Section V.D. For such a transaction, a bank or MSB is expected to collect, at a minimum, name and physical address of each counterparty.

If a customer of a bank or MSB is a sender in a transaction that triggers one or more of the above identity verification and recordkeeping requirements, the bank or MSB should not complete transmission of funds until the requisite verification and recordkeeping have been completed.[5] [5] See https://www.govinfo.gov/content/pkg/FR-2020-12-23/pdf/2020-28437.pdf, Sections V.C.1, V.D.

Moreover, banks and MSBs are expected to establish and follow risk-based procedures to verify their hosted wallet customers' identities.[6] [6] See https://www.govinfo.gov/content/pkg/FR-2020-12-23/pdf/2020-28437.pdf, Section V.C.1. The procedures should be sufficient to allow a bank or MSB to form a reasonable belief that it knows a customer's true identity. Likewise, banks and MSBs are expected to establish and follow risk-based procedures to determine whether to obtain additional information about their customers' counterparties, or to take steps to confirm accuracy of counterparty information.[7] [7] See https://www.govinfo.gov/content/pkg/FR-2020-12-23/pdf/2020-28437.pdf, Sections V.B, V.D. multiple distributed ledgers that are linked in a suitable manner (e.g., using a suitable crossledger referencing scheme).

The inventors have recognized and appreciated that one or more of the techniques described herein may be used to facilitate compliance with regulatory requirements such as those outlined in the FinCEN notice of proposed rulemaking of December 23, 2020.

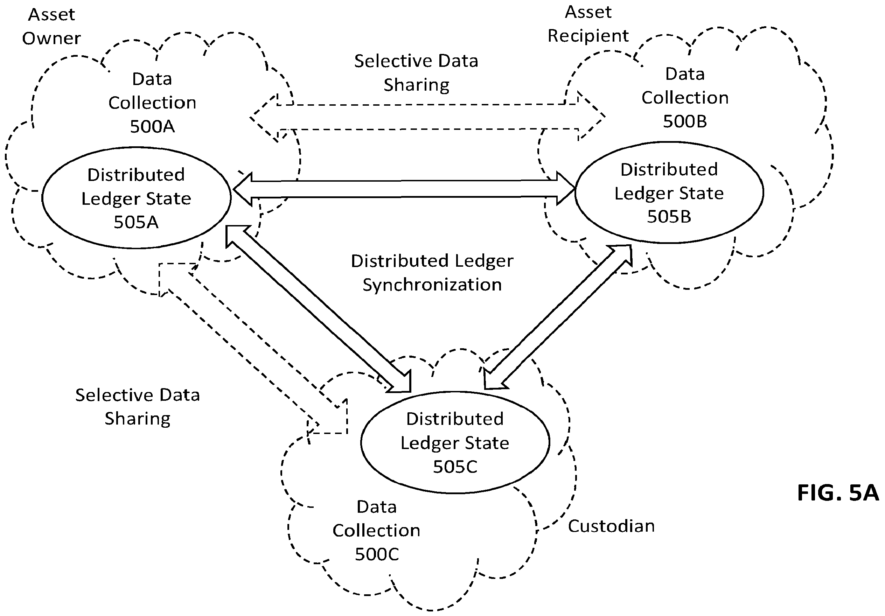

FIG. 5A shows illustrative data collections 500A-C, in accordance with some embodiments. The data collection 500A may be associated with an asset owner, which may be an entity currently holding one or more digital assets to be transferred. The data collection 500B may be associated with an asset recipient, which may be an entity to which the one or more digital assets are to be transferred. The data collection 500C may be associated with a custodian, which may be an entity that provides a custodial key service.

In some embodiments, the asset owner, the asset recipient, and/or the custodian may be associated with one or more nodes in a network of nodes that collectively maintain a distributed ledger. For instance, the data collections 500A-C may include, respectively, distributed ledger states 505A-C, and the one or more associated network nodes may participate in a protocol to synchronize the distributed ledger states 505A-C. In this manner, the entities may publish non-sensitive data (e.g., hashes of sensitive data) to the distributed ledger by storing the non-sensitive data as part of the respective distributed ledger states.

It should be appreciated that aspects of the present disclosure are not limited to maintaining a distributed ledger state in any particular manner, or at all. For instance, in some embodiments, the asset owner, the asset recipient, and/or the custodian may access a distributed ledger via an associated network node, without maintaining a distributed ledger state. Additionally, or alternatively, a distributed ledger state may include state information of

In some embodiments, the data collections 500A-C may be managed by respective data management services (not shown in FIG. 5A) similar to the illustrative data management services 110A-B in the example of FIG. 1B. Additionally, or alternatively, the distributed ledger states 505A-C may be managed by respective distributed ledger clients (not shown in FIG. 5A) similar to the illustrative distributed ledger clients 115A-B in the example of FIG. 1B.

In some embodiments, the asset owner and the asset recipient may engage in a transaction via respective applications (not shown in FIG. 5A). The applications may invoke, respectively, application programming interfaces provided by the data management services of the asset owner and the asset recipient. The data management services may in turn communicate with each other via a secure channel (e.g., with end-to-end encryption) to effectuate selective data sharing between the data collections 500A-B.

In some embodiments, the asset owner's data management service may communicate with the custodian's data management service via a secure channel (e.g., with end-to-end encryption) to effectuate selective data sharing between the data collections 500A and 500C. For instance, the asset owner's data management service may initiate a request to transfer one or more digital assets to the asset recipient. Upon receiving such a request, the custodian's data management service may perform one or more checks, such as checking an identity of the asset owner, an identity of the asset recipient, and/or compliance with one or more digital asset transfer restrictions (e.g., one or more of the identity verification, reporting, and/or recordkeeping requirements of the Fin-CEN proposed rules of Dec 23, 2020). If the one or more checks are successful, the custodian's data management service may use one or more cryptographic keys associated with the one or more digital assets to authorize the proposed transfer.

In some embodiments, the custodian's data management service may not directly interact with the asset recipient's data management service. Instead, the custodian's data management service may check an identity of the asset recipient based on information received from the asset owner's data management service.

Although only one custodian is shown in FIG. 5A, it should be appreciated that aspects of the present disclosure are not so limited. In some embodiments, there may be M custodians, *N* of which may be asked to authorize transfer of the one or more digital assets. It should also be appreciated that any suitable entity may provide a custodial key service, and that a custodial key service may be implemented in any suitable manner using one or more computers.

In some embodiments, a custodial key service may include program logic for automatically enforcing one or more digital asset transfer restrictions. Such a transfer restriction may be hardcoded into the program logic itself. Additionally, or alternatively, the program logic, when executed, may access an applicable transfer restriction from a suitable source. For instance, one or more characteristics of a proposed transfer may be used to search one or more databases of transfer restrictions.

As an example, a jurisdiction associated with an asset owner or an asset recipient may be used to identify one or more applicable regulations. As another example, a financial institution hosting a wallet of the asset owner or the asset recipient, or that the sender or the recipient is using an unhosted wallet, may be used to determine if one or more identity verification, reporting, and/or recordkeeping requirements are triggered. Additionally, or alternatively, an amount of the proposed transfer may be used to determine if one or more identity verification, reporting, and/or recordkeeping requirements are triggered.

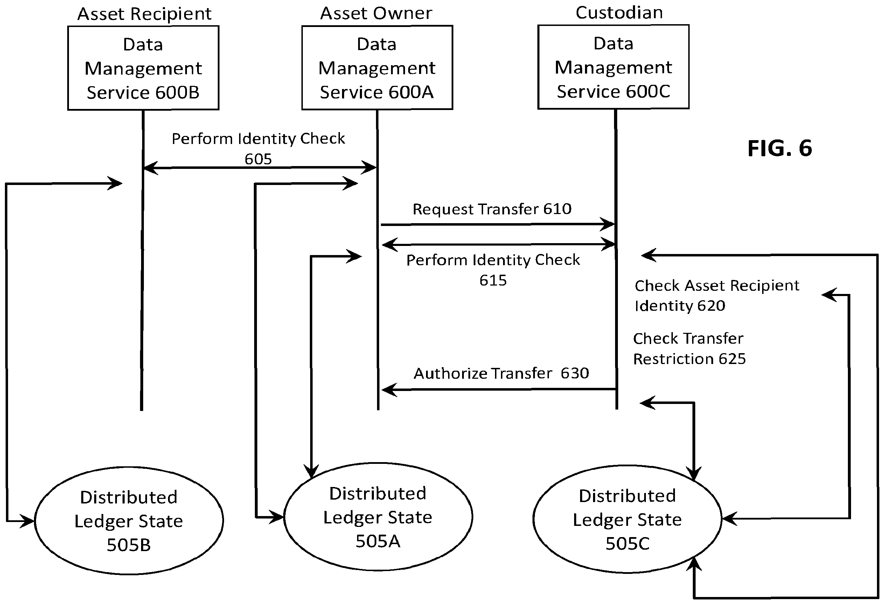

FIG. 6 shows illustrative data management services 600A-C, in accordance with some embodiments. The data management services 600A-C may be associated with an asset owner, an asset recipient, and a custodian, respectively. For instance, the data management services 600A-C may manage, respectively, the illustrative data collections 500A-C in the example of FIG. 5A. Each of the data management services 600A-C may be implemented in any suitable manner, for instance, as described in FIGs. 1B-C.

In some embodiments, the asset owner may request that the custodian effectuate a transfer of one or more digital assets to the asset recipient, for instance, as described in connection with the example of FIG. 5A. To that end, the data management services 600A-C may participate in a transfer process, an example of which is shown in FIG. 6.

At act 605, the asset owner's data management service 600A may check one or more attribute attestations of the asset recipient (e.g., as described in connection with the example of FIG. 4). Additionally, or alternatively, the asset recipient's data management service 600B may check one or more attribute attestations of the asset owner (e.g., as described in connection with the example of FIG. 4).

The asset owner's data management service 600A may check any suitable set of one or more attribute attestations of the asset recipient. For instance, an application of the asset owner (not shown in FIG. 6) may communicate with an application of the asset recipient (not shown in FIG. 6) to request that the asset recipient provide a suitable form of identification (e.g., passport, driver's license, credit card, etc.). This may allow the asset owner to confirm that a transfer of the one or more digital assets to the asset recipient complies with one or more government and/or other regulations (e.g., AML/CFT regulations).

In some embodiments, the asset recipient's application may invoke an application programming interface provided by the data management service 600B, which may, in response, establish a secure communication channel (e.g., with end-to-end encryption) with the data management service 600A. The data management service 600B may use the secure communication channel to send, to the data management service 600A, one or more requested attribute values. For instance, if the requested form of identification includes a passport, the data management service 600B may send one or more items of information, such as an image of a photo page of the passport, a code (e.g., QR code, bar code, etc.) read from the passport, name, date of birth, issue date, expiry date, etc.

Additionally, or alternatively, the data management service 600B may send, to the data management service 600A, a distributed ledger address to which the one or more digital assets are to be transferred (e.g., a TO account). Such a distributed ledger address may be sent as an item of information in addition to, or instead of, one or more items of information from a form of identification (e.g., passport, driver's license, credit card, etc.) that is independent of the distributed ledger.

It should be appreciated that aspects of the present disclosure are not limited to the data management service 600B sending an item of information directly to the data management service 600A. In some embodiments, the data management service 600B may send a pointer to a location where an item of information may be fetched.

In some embodiments, each item of information sent by the data management service 600B may be treated as a separate attribute value with a corresponding attribute attestation. However, it should be appreciated that aspects of the present disclosure are not limited to providing attribute values at any particular granularity. In some embodiments, a set of multiple items may be treated as a single attribute value, and thus may correspond to a single attribute attestation.

In some embodiments, the data management service 600B may send, to the data management service 600A, a pointer to a smart contract programmed to manage one or more attribute attestations. For instance, the smart contract may manage state transitions of the one or more attribute attestations. Additionally, or alternatively, the smart contract may manage a badge storing one or more respective pointers to the one or more attribute attestations. However, it should be appreciated that aspects of the present disclosure are not limited to using a smart contract or a badge.

In some embodiments, the data management service 600A may use a pointer received from the data management service 600B to access one or more attribute attestations from a distributed ledger (e.g., as represented by the illustrative distributed ledger state 505A in the example of FIG. 5A). The data management service 600A may then check one or more received attribute values (e.g., the passport photo page, the distributed ledger address, etc.) against one or more respective attribute attestations accessed from the distributed ledger (e.g., as described in connection with the example of FIG. 4).

Additionally, or alternatively, the data management service 600B may send, to the data management service 600A, a proof that the asset recipient controls the smart contract that manages the one or more attribute attestations. For instance, in some embodiments, a proof may include a message signed using a private key that controls the smart contract. Such a signature may be verified by looking up, from the distributed ledger, a public key associated with the smart contract, and using the public key to check the signature.

In some embodiments, the data management service 600B may check one or more attribute attestations of the asset owner in a similar manner. This may allow the asset recipient to confirm that a transfer of the one or more digital assets from the asset owner is in compliance with government and/or other regulations (e.g., AML/CFT regulations). However, it should be appreciated that aspects of the present disclosure are not limited to checking attribute attestations in any particular manner, or at all.

Returning to FIG. 6, if the data management service 600A successful checks the one or more attestations of the asset recipient, the data management service 600A may, at act 610, submit a transfer request to one or more custodians. For instance, the data management service 600A may establish a secure communication channel (e.g., with end-to-end encryption) with the data management service 600C, and may use the secure channel to send a transfer request to the data management service 600C.

In some embodiments, the transfer request may indicate a distributed ledger address where the one or more digital assets to be transferred are currently held (e.g., a FROM account), one or more respective amounts of the one or more digital assets to be transferred, and/or a distributed ledger address to which the one or more digital assets are to be transferred (e.g., a TO account).

Additionally, or alternatively, the transfer request may include information about the asset recipient. For instance, in some embodiments, the transfer request may include one or more pointers to one or more respective attribute attestations of the asset recipient, a pointer to a smart contract that manages the one or more attribute attestations, one or more attribute values of the asset recipient, and/or one or more pointers to locations where the one or more attribute values may be fetched, respectively. The one or more attribute values may correspond, respectively, to the one or more attribute attestations.

In some embodiments, the information about the asset recipient may be received by the data management service 600A from the data management service 600B at act 605, and may be forwarded by the data management service 600A to the data management service 600C at act 610. As discussed below in connection with act 620, this information may allow the data management service 600C to check the asset recipient's identity without communicating directly with the data management service 600B.

At act 615, the custodian's data management service 600C may check one or more attribute attestations of the asset owner (e.g., as described in connection with the examples of FIG. 4 and/or act 605 of FIG. 6). For instance, the data management service 600A may send, to the data management service 600C, one or more pointers to one or more respective attribute attestations of the asset owner, a pointer to a smart contract that manages the one or more attribute attestations, one or more attribute values of the asset owner, and/or one or more pointers to locations where the one or more attribute values may be fetched, respectively. The one or more attribute values may correspond, respectively, to the one or more attribute attestations.

In some embodiments, the custodian's data management service 600C may check one or more attribute attestations of the asset owner pursuant to the custodian's risk-based procedures for conducting customer due diligence. For instance, one or more attributes (e.g., name, date of birth, passport number, driver's license number, phone number, physical address, etc.) may be selected according to the custodian's AML/CFT program, and the data management service 600C may check that one or more corresponding attribute attestations have been signed by a trusted entity.

In some embodiments, an attribute value of the asset owner may be verified by an entity that performs know-your-customer (KYC) checks. Such an entity may be referred to herein as a KYC provider, which may sign a corresponding attribute attestation to evidence that the attribute value has been duly verified. Additionally, or alternatively, an attribute value of the asset owner may be issued by a government agency or some other suitable authority. Such an entity may be referred to herein as an attribute issuer, which may sign a corresponding attribute attestation to evidence that the attribute value has been duly issued.

In some embodiments, the data management service 600C may check that a distributed ledger address where the one or more digital assets to be transferred are currently held (e.g., a FROM account) indeed belongs to an entity associated with the one or more attribute attestations accessed from the distributed ledger. Additionally, or alternatively, the one or more attribute attestations may be stored in a smart contract and/or organized into a badge, and the data management service 600C may check that the distributed ledger address where the one or more digital assets are currently held indeed belongs to an entity associated with the smart contract and/or the badge.

For instance, in some embodiments, the data management service 600C may check that the one or more attribute attestations include an attestation for a distributed ledger address attribute, and that the corresponding attribute value matches the distributed ledger address where the one or more digital assets are currently held.

In some embodiments, the asset owner's data management service 600A may check one or more attribute attestations of the custodian in a similar manner. However, it should be appreciated that aspects of the present disclosure are not limited to checking attribute attestations in any particular manner, or at all.

It should also be appreciated that aspects of the present disclosure are not limited to performing an identity check in response to a transfer request. In some embodiments, the asset owner's data management service 600A may, prior to requesting a transfer, register the one or more digital assets with the custodian's data management service 600C. As part of a registration process, the custodian's data management service 600C may check one or more attribute attestations of the asset owner. Additionally, or alternatively, the asset owner's data management service 600A may check one or more attribute attestations of the custodian.

At act 620, the data management service 600C may check the asset recipient's identity. In some embodiments, this may be done without interacting directly with the data management service 600B. For instance, the data management service 600C may use a pointer received from the data management service 600A to access one or more attribute attestations of the asset recipient from the distributed ledger (e.g., as represented by the illustrative distributed ledger state 505C in the example of FIG. 5A). The data management service 600C may then check one or more attribute values forwarded by the data management service 600A against the one or more attribute attestations accessed from the distributed ledger (e.g., as described above in connection with the example of FIG. 4, and/or acts 605 and/or 615 of FIG. 6).

However, it should be appreciated that aspects of the present disclosure are not limited to having the asset owner send information about the asset recipient to the custodian. In some embodiments, the custodian may interact with the asset recipient in addition to, or instead of, the asset owner.

In some embodiments, the custodian's data management service 600C may check one or more attribute attestations of the asset recipient pursuant to the custodian's risk-based procedures for collecting counterparty information. For instance, one or more attributes (e.g., name, phone number, physical address, distributed ledger address, hosting institution, hosting jurisdiction, etc.) may be selected according to the custodian's AML/CFT program, and the data management service 600C may check that one or more corresponding attribute attestations have been signed by a trusted KYC provider or a trusted attribute issuer.

The inventors have recognized and appreciated that an asset owner may attempt to evade a transfer restriction (e.g., AML/CFT regulations) by indicating in the transfer request a distributed ledger address of an entity that is subject to the transfer restriction, but sending information (e.g., one or more attribute attestations) of an entity that is not subject to the transfer restriction. Accordingly, in some embodiments, the data management service 600C may check that a distributed ledger address to which the one or more digital assets are to be transferred (e.g., a TO account indicated in the transfer request received at act 610) indeed belongs to an entity associated with the one or more attribute attestations accessed from the distributed ledger. Additionally, or alternatively, the one or more attribute attestations may be stored in a smart contract and/or organized into a badge, and the data management service 600C may check that the distributed ledger address to which the one or more digital assets are to be transferred indeed belongs to an entity associated with the smart contract and/or the badge.

For instance, in some embodiments, the data management service 600C may check that the one or more attribute attestations include an attestation for a distributed ledger address attribute, and that the corresponding attribute value matches the distributed ledger address to which the one or more digital assets are to be transferred.

At act 625, the data management service 600C may check one or more transfer restrictions. In some embodiments, the data management service 600C may check a blacklist and/or a whitelist to confirm that the proposed transfer should be allowed to proceed. For example, the blacklist (or the whitelist, respectively) may indicate owners, recipients, and/or specific assets for which transfers are prohibited (or allowed, respectively). Additionally, or alternatively, the data management service 600C may perform one or more checks according to one or more government and/or other regulations (e.g., AML/CFT regulations) to confirm that the proposed transfer is in compliance.

In some embodiments, the data management service 600C may check compliance of a transfer restriction based on one or more attribute values of the asset owner and/or the asset recipient. For example, the data management service 600C may have, at act 615 or act 620, checked an attribute value of the asset owner or the asset recipient against an attribute attestation accessed from the distributed ledger. In some embodiments, this may be done by applying, to a received salt and a received attribute value, a cryptographic hash function indicated in the attribute attestation. A resulting salted hash may then be compared against a cryptographic proof found in the attribute attestation. However, it should be appreciated that aspects of the present disclosure are not limited to generating or checking a cryptographic proof in any particular manner.

In some embodiments, having checked the attribute value against the attribute attestation, the data management service 600C may apply one or more transfer restriction rules to the attribute value. As one example, the attribute value may be the asset recipient's country of residence or legal name, and the custodial key service may apply one or more transfer restriction rules regarding sanctioned countries or individuals.

As another example, the attribute value may be the asset recipient's hosting institution or hosting jurisdiction, and the custodial key service may use the hosting institution or hosting jurisdiction to determine if one or more identity verification, reporting, and/or recordkeeping requirements are triggered, such as those outlined in the FinCEN notice of proposed rulemaking of December 23, 2020. For instance, the asset recipient's hosting institution or hosting jurisdiction may be checked against a blacklist of institutions or jurisdictions (e.g., FinCEN's Foreign Jurisdictions List). If the asset recipient's hosting institution or hosting jurisdiction is blacklisted, or if the attribute value indicates the asset recipient's wallet is unhosted, one or more identity verification, reporting, and/or recordkeeping requirements may be triggered.

In some embodiments, an amount of the proposed transfer may be used to determine if one or more identity verification, reporting, and/or recordkeeping requirements are triggered. For instance, identity verification and recordkeeping requirements may be triggered if the amount of the proposed transfer exceeds $3,000. The requisite record may be prepared and stored prior to authorizing the proposed transfer. Additionally, or alternatively, identity verification and reporting requirements may be triggered if the amount of the proposed transfer exceeds $10,000. The requisite report may be prepared and filed after completing the proposed transfer.

In some embodiments, the asset recipient's hosting institution or hosting jurisdiction may be checked against a whitelist of institutions or jurisdictions (e.g., institutions registered with FinCEN or a similar agency in another jurisdiction). If the asset recipient's hosting institution or hosting jurisdiction is whitelisted, an exemption to one or more identity verification, reporting, and/or recordkeeping requirements may be applied.

In some embodiments, if all of the one or more checks performed by the data management service 600C are successful, the data management service 600C may, at act 630, allow the proposed transfer to proceed. Otherwise, the data management service 600C may flag the proposed transfer for additional review (e.g., by a human compliance specialist).

In some embodiments, the data management service 600C may effectuate the proposed transfer by signing a data structure storing information regarding the proposed transfer, and may return the signed data structure to the data management service 600A. The data structure may be in a format suitable for processing by a distributed ledger that is managing the one or more digital assets to be transferred, and the data management service 600C may sign the data structure using a cryptographic key that controls the one or more digital assets (e.g., one of M such keys). The data management service 600A may cause the signed data structure to be published to the distributed ledger, thereby effectuating the proposed transfer.

Additionally, or alternatively, the one or more digital assets may be associated with program logic (e.g., a smart contract) that allows the data management service 600C to effectuate the proposed transfer directly in the distributed ledger, for example, by using the cryptographic key that controls the one or more digital assets to sign one or more appropriate messages.

In some embodiments, $M$ custodians may be available. The one or more digital assets may remain with the asset owner, or may be held in escrow, until at least $N$ custodians ($N \leq M$) have approved the proposed transfer. For instance, a distributed ledger with a multi-signature scheme may be used, where each digital asset may be associated with $M$ cryptographic keys. Each of the $M$ custodians may have a corresponding key, and a transfer of the digital asset may require at least $N$ custodians to sign with their respective keys. However, it should be appreciated that any suitable number of custodians may be used, including just one custodian, or no custodian at all. When there are multiple custodians, such custodians may operate independently of one another.

In some embodiments, program logic (e.g., a smart contract) associated with a digital asset may check that at least a threshold number of custodians have signed. Additionally, or alternatively, the program logic may check compliance of one or more applicable transfer restrictions. For instance, the program logic may check compliance of a transfer restriction based on one or more attribute values of the asset owner and/or the asset recipient. The program logic may check such an attribute value against an attribute attestation stored in a distributed ledger (e.g., in an appropriate smart contract), and may release the digital asset only if none of the one or more applicable transfer restrictions is violated. In this manner, compliance of transfer restrictions may be checked in a trust layer, in addition to, or instead of, a privacy layer.

Although some details of implementation are described above in connection with FIG. 6, it should be appreciated that such details are provided solely for purposes of illustration. Aspects of the present disclosure are not limited to any particular manner of implementation. For instance, in some embodiments, the custodian may manage the asset recipient's wallet, instead of the asset owner's wallet. Accordingly, the data management service 600C may not authorize the proposed transfer. Nevertheless, the data management service 600C may check the asset recipient's identity (e.g., by interacting with the data management service 600B directly) and/or the asset owner's identity (e.g., by interacting with the data management service 600A directly, or by receiving relevant information forwarded by the data management service 600B). Additionally, or alternatively, the data management service 600C may determine if one or more identity verification, reporting, and/or recordkeeping requirements are triggered (e.g., as described above in connection with act 625 in the example of FIG. 6), and may take one or more appropriate actions to comply with any triggered requirement.

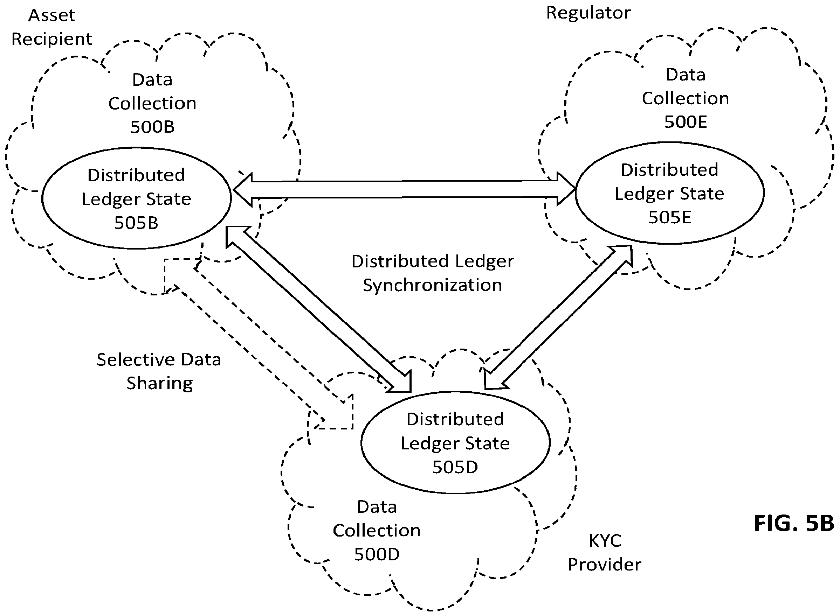

FIG. 5B shows the illustrative data collection 500B in the example of FIG. 5A, as well as illustrative data collections 500D-E, in accordance with some embodiments. The data collection 500B may be associated with an asset recipient, which may be an entity to which one or more digital assets are to be transferred from an owner of the one or more digital assets. The data collection 500D may be associated with a KYC provider. The data collection 500E may be associated with an entity that is responsible for promulgating and/or enforcing one or more government and/or other regulations, such as AML/CFT regulations. Such an entity may be referred to herein as a regulator. Examples of regulators include, but are not limited to, the Office of Foreign Asset Control (OFAC) of the U.S. Department of the Treasury, as well as the European Banking Authority (EBA) of the European Union.

In some embodiments, the KYC provider and/or the regulator may be associated with one or more nodes in the network of nodes that collectively maintain the illustrative distributed ledger in the example of FIG. 5A. For instance, the data collections 500D-E may include, respectively, distributed ledger states 505D-E, and the one or more associated network nodes may participate in a protocol to synchronize the distributed ledger states 505D-E. In this manner, the entities may publish non-sensitive data (e.g., hashes of sensitive data) to the distributed ledger by storing the non-sensitive data as part of the respective distributed ledger states.

It should be appreciated that aspects of the present disclosure are not limited to maintaining a distributed ledger state in any particular manner, or at all. For instance, in some embodiments, the KYC provider and/or the regulator may access the distributed ledger via an associated network node, without maintaining a distributed ledger state.

In some embodiments, the data collections 500D-E may be managed by respective data management services (not shown in FIG. 5B) similar to the illustrative data management services 110A-B in the example of FIG. 1B. Additionally, or alternatively, the distributed ledger states 505D-E may be managed by respective distributed ledger clients (not shown in FIG. 5B) similar to the illustrative distributed ledger clients 115A-B in the example of FIG. 1B.

In some embodiments, the asset recipient and the KYC provider may engage in a KYC process via respective applications (not shown in FIG. 5B). The applications may invoke, respectively, application programming interfaces provided by the data management services of the asset recipient and the KYC provider. The data management services may in turn communicate with each other via a secure channel (e.g., with end-to-end encryption) to effectuate selective data sharing between the data collections 500B and 500D. For instance, the data management services may participate in a process similar to one of the illustrative processes 300, 320, and 340 in the examples of FIGs. 3A-C.

It should be appreciated that aspects of the present disclosure are not limited to the asset recipient engaging in a KYC process. Additionally, or alternatively, the asset owner may engage in a KYC process with the same KYC provider, or a different KYC provider.

As discussed above in connection with act 625 in the example of FIG. 6, a custodian may check compliance of one or more transfer restrictions, for example, by checking a blacklist and/or a whitelist to confirm that the proposed transfer should be allowed to proceed. For example, the blacklist (or the whitelist, respectively) may indicate owners, recipients, and/or specific assets for which transfers are prohibited (or allowed, respectively).

The inventors have recognized and appreciated that an asset owner/recipient may wish to limit an amount of information that is revealed to a custodian or another entity conducting a compliance check. For instance, an asset owner/recipient may reside in a country in the European Union (EU), and it may be generally known that no EU country is on a sanctioned list. The asset owner/recipient may wish to demonstrate that the asset owner/recipient does not reside in any jurisdiction that is on the sanctioned list, but, for privacy reasons, may not wish to reveal the exact EU country in which the asset owner/recipient resides. Accordingly, in some embodiments, techniques are provided for conducting compliance checks in a manner that preserves privacy.

Various zero knowledge schemes have been proposed to allow a prover to prove a statement to a verifier without revealing too much information. For example, the prover may commit to a value cryptographically, and may use a zero-knowledge set-membership (ZKSM) scheme to demonstrate to the verifier that the committed value belongs to a certain set of values, without revealing the committed value itself.[8] [8] Camenisch et al. Efficient protocols for set membership and range proofs. In Advances in Cryptology - ASIACRYPT 2008, pages 234-252. Lecture Notes in Computer Science, volume 5350.

In some embodiments, an asset owner/recipient may commit to a jurisdiction cryptographically, and may use a ZKSM scheme to demonstrate to a custodian that the committed jurisdiction belongs to a certain set of allowed jurisdictions, without revealing the committed jurisdiction itself. However, the inventors have recognized and appreciated that such a scheme alone may be insufficient to establish compliance. For instance, the asset owner/recipient may attempt to evade a transfer restriction by committing to an allowed jurisdiction in which the asset owner/recipient does not in fact reside. Such a deception may only be exposed by revealing the committed jurisdiction and checking whether the asset owner/recipient in fact resides in the committed jurisdiction. Thus, the custodian may be unable to establish compliance without compromising privacy of the asset owner/recipient.

Accordingly, in some embodiments, techniques are provided for committing to a value in a trusted manner. For instance, an asset owner/recipient may commit to a jurisdiction in such a way that a custodian may be able to trust that the asset owner/recipient in fact resides in the committed jurisdiction.

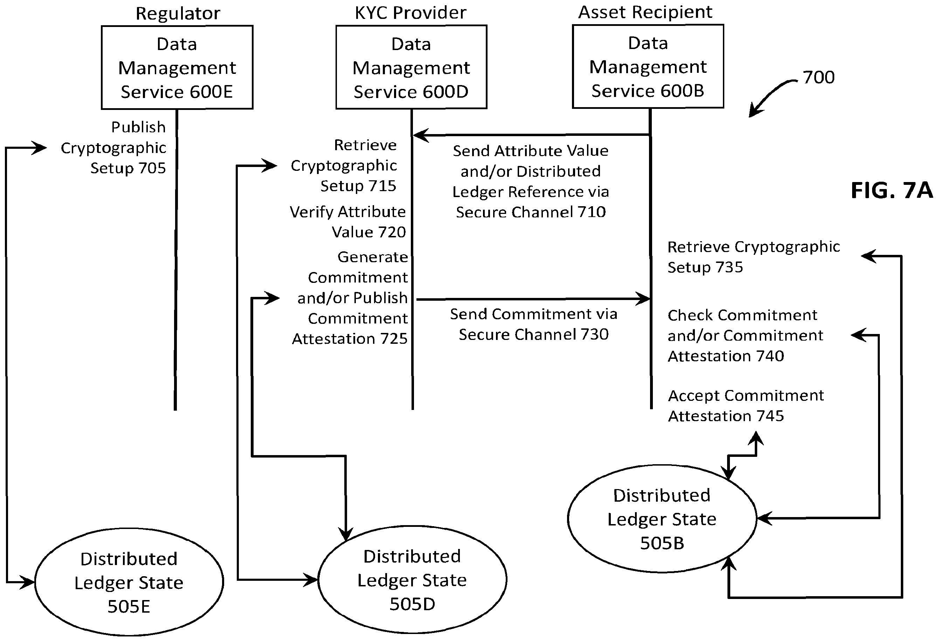

FIG. 7A shows an illustrative process 700 for cryptographic commitment, in accordance with some embodiments. The process 700 may be performed by the illustrative data management services 600B in the example of FIG. 6, as well as illustrative data management services 600D-E. The data management service 600B may be associated with an asset recipient, and may manage the illustrative data collection 500B in the example of FIG. 5B. The data management service 600D may be associated with a KYC provider, and may manage the illustrative data collection 500D in the example of FIG. 5B. The data management service 600E may be associated with a regulator, and may manage the illustrative data collection 500E in the example of FIG. 5B. Each of the data management services 600B, D-E may be implemented in any suitable manner, for instance, as described in connection with the examples of FIGs. 1A-C.

In some embodiments, the regulator may publish a whitelist, such as a list of allowed jurisdictions. This may be done in any suitable manner. For example, the regulator may publish the whitelist on a web site associated with the regulator. Additionally, or alternatively, the regulator may publish the whitelist to the illustrative distributed ledger in the example of FIG. 5B (e.g., by storing the whitelist as part of the illustrative distributed ledger state 505E).

In some embodiments, the regulator may authenticate the whitelist, for instance, by signing the whitelist using a private key associated with a distributed ledger address of the regulator. In this manner, any entity with access to the distributed ledger may use the distributed ledger address of the regulator to look up a public key to check the signature on the whitelist. However, it should be appreciated that aspects of the present disclosure are not limited to using a private key associated with a distributed ledger address for authentication, or to any authentication at all. Any suitable public key infrastructure may be used.

At act 705, the regulator may publish a cryptographic setup. This may be done in any suitable manner, for instance, on a web site and/or a distributed ledger as described above in connection with publishing a whitelist. In some embodiments, the cryptographic setup may be authenticated, for instance, as described above in connection with authenticating a whitelist.

In some embodiments, the cryptographic setup may include one or more cryptographic functions and/or values to be used for commitment and/or proof of knowledge. For instance, the cryptographic set up may include a suitable bilinear map $e : G_1 \times G_1 \rightarrow G_T$ and generators

$g, h$ of the group $G_1$, where $G_1$ and $G_T$ are groups of prime order $p$.

Additionally, or alternatively, the regulator may generate an asymmetric key pair $< K_{pri}, K_{pub} >$, and may publish $K_{pub}$ as part of the cryptographic setup. For instance, $K_{pri}$ may be a randomly selected number $x \in Z_p$, and $K_{pub}$ may be $y = g^x$.

Additionally, or alternatively, the regulator may, for each jurisdiction in the whitelist, generate a representative value for that jurisdiction. For instance, the regulator may randomly select $i \in Z_p$ and generate $A_i = g^{\frac{1}{x+i}}$ for each allowed jurisdiction. The regulator may publish $\{A_i \mid i \in S\}$ as part of the cryptographic setup, where $S$ denotes the set of randomly selected values for the jurisdictions in the whitelist.

It should be appreciated that aspects of the present disclosure are not limited to performing commitment and/or proof of knowledge in any particular manner, or at all. Thus, in some embodiments, a different cryptographic setup may be used depending on a selected commitment scheme and/or a selected proof-of-knowledge scheme.

Returning to FIG. 7A, the asset recipient may, at act 710, send an attribute value (e.g., a jurisdiction of residence) to the KYC provider via a secure channel (e.g., with end-to-end encryption). Additionally, or alternatively, the asset recipient may send a distributed ledger reference for use in attestation by the KYC provider.

At act 715, the KYC provider may retrieve (e.g., from the web site and/or the distributed ledger) the cryptographic setup published by the regulator. In some embodiments, the KYC provider may look up, from a suitable public key infrastructure (e.g., the distributed ledger itself), a public key associated with the regulator, and may use the public key to check that the cryptographic setup was signed by the regulator.

At act 720, the KYC provider may verify the attribute value received from the asset recipient at act 710. For instance, the KYC provider may physically examine a government-issued identification document (e.g., a passport, a driver's license, etc.) to confirm that the asset recipient in fact resides in the jurisdiction indicated by the asset recipient. Additionally, or alternatively, the KYC provider may verify the attribute value indirectly (e.g., as described above in connection with the example of FIG. 1C).

If the KYC provider is satisfied that the asset recipient in fact resides in the jurisdiction indicated by the asset recipient, the KYC provider may, at act 725, generate a commitment for the jurisdiction indicated by the asset recipient. For instance, the KYC provider may randomly select $r \in Z_p$ and generate $C = g^\sigma h^r$, where $\sigma \in S$ corresponds to the jurisdiction indicated by the asset recipient.

In some embodiments, the KYC provider may generate an attribute attestation for $C$, and may publish the attribute attestation using the distributed ledger reference received from the asset recipient at act 710 (e.g., as described above in connection with the example of FIG. 3C). For instance, the attribute attestation may include a cryptographic proof of $C$, and the KYC provider may electronically sign the cryptographic proof.

At act 730, the KYC provider may send the commitment $C$ to the asset recipient via the secure channel. Additionally, alternatively, the KYC provider may send, via the secure channel, the random value r used in generating the commitment $C$.

At act 735, the asset recipient may retrieve (e.g., from the web site and/or the distributed ledger) the cryptographic setup published by the regulator. In some embodiments, the asset recipient may look up, from a suitable public key infrastructure (e.g., the distributed ledger itself), a public key associated with the regulator, and may use the public key to check that the cryptographic setup was signed by the regulator.

At act 740, the asset recipient may identify $\sigma$, $g$, $h$ from the retrieved cryptographic setup, and may check that $C = g^\sigma h^r$, where $C, r$ are values received from the KYC provider at act 730.

Additionally, or alternatively, the asset recipient may use the distributed ledger reference to retrieve an attribute attestation from the distributed ledger, and may check that the KYC provider has properly attested to the commitment $C$ (e.g., as described above in connection with the example of FIG. 3C). If the attestation check is successful, the asset recipient may, at act 745, accept attribute the attestation (e.g., as described above in connection with the example of FIG. 3C).

In some embodiments, the asset recipient may use the commitment $C$ and/or the random value r received from the KYC provider to prove to a custodian (or another entity conducting a compliance check) that the asset recipient resides in a jurisdiction in the whitelist. The custodian may check that the KYC provider has properly attested to the commitment $C$, which may be sufficient assurance that the asset recipient in fact resides in the committed jurisdiction, even if the custodian may not know precisely which whitelisted jurisdiction.

Although some details of implementation are described above in connection with FIG. 7A, it should be appreciated that such details are provided solely for purposes of illustration. The techniques introduced above and/or discussed in detail below are not limited to any particular manner of implementation. For instance, in some embodiments, the asset recipient may generate the commitment $C$, and may send the commitment $C$, and/or the random value $r$ used to generate the commitment $C$, to the KYC provider. The KYC provider may check that $C = g^\sigma h^r$, where $C, r$ are values received from the asset recipient. The KYC provider may then generate and/or publish an attribute attestation for the commitment $C$, to be checked and/or accepted by the asset recipient (e.g., as described above in connection with the example of FIG. 3B). Additionally, or alternatively, the asset recipient may generate and/or publish an attribute attestation for the commitment *C,* to be checked and/or accepted by the KYC provider (e.g., as described above in connection with the example of FIG. 3A).

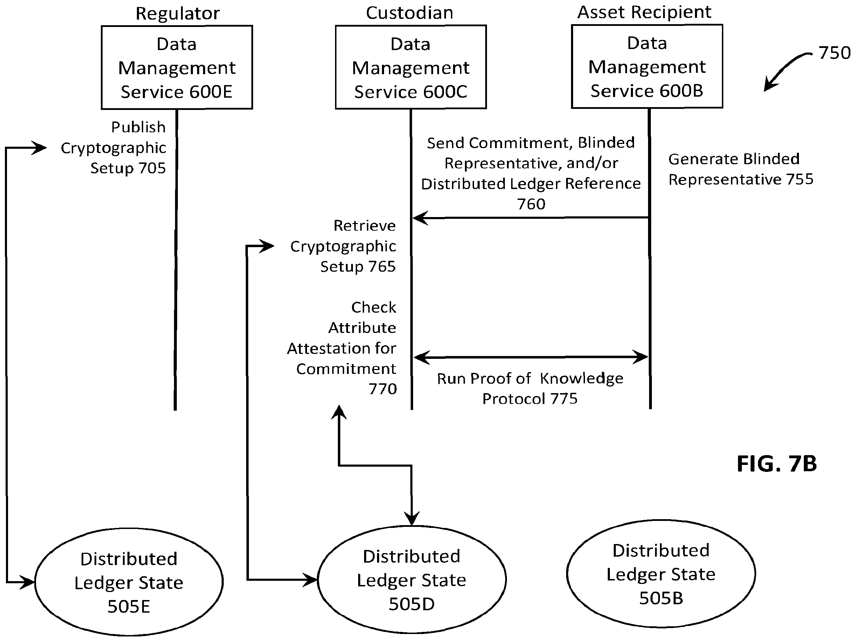

FIG. 7B shows an illustrative process 750 for proof of knowledge, in accordance with some embodiments. The process 750 may be performed by the illustrative data management services 600B-C in the example of FIG. 6, as well as the illustrative data management service 600E in the example of FIG. 7A. As described above, the data management services 600B-C, E may be associated with an asset recipient, a custodian, and a regulator, respectively.

In some embodiments, the data management services 600B-C may run a proof of knowledge protocol, whereby the asset recipient may use a commitment *C* and/or an associated random value r to prove to the custodian that a corresponding committed jurisdiction is in a whitelist published by a regulator. The commitment *C* may be generated using the random value *r* and a cryptographic setup published by the regulator, for instance, as described in connection with the example of FIG. 7A. The random value *r* may be generated by a KYC provider and shared with the asset recipient, or vice versa.

At act 755, the asset recipient may generate a blinded representative of the committed jurisdiction. For instance, the asset recipient may randomly select $v \in Z_p$, and may generate $V = A_\sigma^v = g^{\frac{v}{x+\sigma}}$, where $\sigma$ denotes the committed jurisdiction.

At act 760, the asset recipient may send the commitment *C* and/or the blinded representative *V* to the custodian via a secure channel (e.g., with end-to-end encryption). Additionally, or alternatively, the asset recipient may send a distributed ledger reference for an attribute attestation of the commitment *C* published and/or accepted by the KYC provider.

At act 765, the custodian may retrieve (e.g., from the web site and/or the distributed ledger) the cryptographic setup published by the regulator. In some embodiments, the custodian may look up, from a suitable public key infrastructure (e.g., the distributed ledger itself), a public key associated with the regulator, and may use the public key to check that the cryptographic setup was signed by the regulator.

At act 770, the custodian may use the distributed ledger reference received from the asset recipient at act 760 to retrieve an attribute attestation from the distributed ledger. The custodian may check the attribute attestation (e.g., as described above in connection with the example of FIG. 4 and/or act 605 of FIG. 6). For instance, the custodian may check that the attestation includes a cryptographic proof of the commitment *C*, and that the KYC provider has signed the cryptographic proof.

If the attribute attestation is checked successfully, the custodian may, at act 775, run a proof-of-knowledge protocol with the asset recipient. In some embodiments, the proof-of-knowledge protocol may be a zero-knowledge proof-of-knowledge protocol. An example of such a protocol is provided below.

1) The asset recipient may randomly select $s, t, m \in Z_p$, and may send $a = e(V, g)^{-s} e(g, g)^t$ and $D = g^s h^m$ to the custodian.

2) In response, the custodian may randomly select $c \in Z_p$, and may send $c$ to the asset recipient.

3) The asset recipient may respond with $z_\sigma = s - \sigma c$, $z_v = t - vc$, and $z_r = m - rc$.

4) The custodian may check that $D = C^c h^{z_r} g^{z_\sigma}$ and $a = e(V, y)^c e(V, g)^{-z_\sigma} e(g, g)^{z_v}$.

If the proof-of-knowledge protocol is successful, the custodian may be satisfied that the committed jurisdiction corresponding to the commitment *C* is indeed in the whitelist, even though the custodian may not know exactly to which jurisdiction in the whitelist the asset recipient has committed. Moreover, since the custodian has checked that the KYC provider has properly attested to the commitment *C*, the custodian may be satisfied that the asset recipient in fact resides in the committed jurisdiction.

Although some details of implementation are described above in connection with FIGs. 7A-7B, it should be appreciated that such details are provided solely for purposes of illustration. The techniques introduced above and/or discussed in detail below are not limited to any particular manner of implementation. For instance, in some embodiments, the custodian may perform the process 750 with the KYC provider, in addition to, or instead of, the asset recipient.

Additionally, or alternatively, a non-interactive proof of knowledge may be used in addition to, or instead of, an interactive proof of knowledge. For instance, a Fiat-Shamir heuristic may be used to convert an interactive proof of knowledge into a non-interactive proof of knowledge. Referring to the above example, the asset recipient may, instead of receiving a randomly selected value c from the custodian, generate *c* as *H(a, D),* where *H* is a suitable cryptographic hash function. In this manner, the custodian may generate c independently, using the same formula (i.e., *H(a, D)).*

In some embodiments, the custodian may perform the process 750 with an asset owner, in addition to, or instead of, the asset recipient. For instance, the asset recipient may send to the asset owner the commitment *C*, the blinded representative *V*, the distributed ledger reference for the attribute attestation of the commitment *C*, and/or the values $a, D, z_\sigma, z_v, z_r$ for a non-interactive proof of knowledge. The asset owner may forward this information to the custodian, so that the custodian may perform a compliance check without communicating directly with the asset recipient.

Additionally, or alternatively, the asset owner may perform the process 700 with the KYC provider, and/or the process 750 with the custodian, to prove that the asset owner resides in a whitelisted jurisdiction.

It should be appreciated that a whitelist of jurisdictions is used herein solely for purposes of illustration. In some embodiments, one or more of the techniques described herein may be used by an entity to prove that the entity is in a whitelist of entities, without revealing the entity's identity. Additionally, or alternatively, one or more of the techniques described herein may be used by an entity to prove that the entity is in a blacklist of entities, or resides in a blacklisted jurisdiction, without revealing the entity's identity or jurisdiction of residence.

The inventors have recognized and appreciated that one or more of the techniques described herein may be used by an entity to prove that the entity's hosting institution (or hosting jurisdiction) is in a whitelist of institutions (or jurisdictions). This may allow application of an exemption to one or more identity verification, reporting, and/or recordkeeping requirements, without revealing the hosting institution (or hosting jurisdiction).

For instance, a regulator (e.g., FinCEN) may publish a whitelist of institutions (e.g., institutions registered with FinCEN or a similar agency in another jurisdiction), as well as a cryptographic setup that includes a representative value for each whitelisted institution. This may be done, for example, as described above in connection with act 705 in the example of FIG. 7A.

In some embodiments, a counterparty transacting with a custodian's customer may perform trusted commitment with a KYC provider using the cryptographic setup published by the regulator (e.g., as described above in connection with the example of FIG. 7A). The counterparty may then generate, and send to the custodian's customer, a non-interactive proof of knowledge to be forwarded to the custodian to prove that the counterparty's hosting institution is whitelisted, without revealing the hosting institution. Additionally, or alternatively, the counterparty may participate in an interactive proof of knowledge with the custodian to prove that the counterparty's hosting institution is whitelisted, without revealing the hosting institution. The counterparty may interact with the custodian directly, indirectly via the custodian's customer, or in some other suitable manner (e.g., as described above in connection with the example of FIG. 7B).

The inventors have further recognized and appreciated that one or more of the techniques described herein may be used by an entity to prove that the entity's hosting institution (or hosting jurisdiction) is in a blacklist of institutions (or jurisdictions), without revealing the hosting institution (or hosting jurisdiction). This may, depending on an amount of a transaction, trigger one or more identity verification, reporting, and/or recordkeeping requirements, such as those outlined in the FinCEN proposed rulemaking of December 23, 2020.

In addition to set membership, zero knowledge schemes have been proposed to allow an entity to prove that a committed value is in a certain range, without revealing the committed value itself.[99] Camenisch et al. Efficient protocols for set membership and range proofs. In Advances in Cryptology - ASIACRYPT 2008, pages 234-252. Lecture Notes in Computer Science, volume 5350. However, for reasons similar to those explained above, such a scheme alone may be insufficient. For instance, an entity may commit to a certain value as purportedly being the entity's account balance, annual salary, age, etc., but the committed value may not be factual.

The inventors have recognized and appreciated that one or more of the trusted commitment techniques described herein may be used for range membership in addition to, or instead of, set membership. For instance, in some embodiments, a committed value $\sigma$ may be expressed in base $u$, for some suitable $u$, as follows: $\sum_{j=0}^{l-1} \sigma_j u^j$. A proof of knowledge may be performed to prove that $\sigma_j$ is a member of [0, $u$ - 1] for each $j \in Z_l$. Each such proof of knowledge may include trusted commitment as described above in connection with the examples of FIGs. 7A-B. For instance, a KYC provider may verify $\sigma$, and may publish and/or accept an attribute attestation for a commitment $C_j$ for each $\sigma_j$. In this manner, it may be proven that $\sigma$ has been duly verified, and that $\sigma$ is in the range $[0, u^l)$.

In some embodiments, an entity (e.g., an asset owner or an asset recipient) may provide to a custodian a blinded representative for each $j \in Z_l$ by randomly selecting $v_j \in Z_p$ and generating $V_j = A_\sigma^{v_j} = g^{\frac{v_j}{x+\sigma_j}}$. A proof-of-knowledge protocol may then be performed as follows.

1) The entity may randomly select $s_j$, $t_j$, $m_j \in Z_p$ for each $j \in Z_l$, and may send $a_j = e(V_j, g)^{-s_j} e(g, g)^{t_j}$ and $D = \prod_{j=0}^{l-1} g^{u^j s_j} h^{m_j}$ to the custodian.

2) In response, the custodian may randomly select $c \in Z_p$, and may send c to the entity.

3) The entity may respond with $z_{\sigma j} = s_j - \sigma_j c$ and $z_{vj} = t_j - v_j c$ for each $j \in Z_l$, and

$$z_r = \sum_{j=0}^{l-1} m_j - rc.$$

4) The custodian may check that $D = C^c h^{z_r} \prod_{j=0}^{l-1} g^{u^j z_{\sigma j}}$ and $a_j = e(V_j, y)^c e(V_j, g)^{-z_{\sigma j}} e(g, g)^{z_{vj}}$.

In some embodiments, it may be proven that $\sigma$ is in the range $[a, b]$ for any $a, b$ by proving that $\sigma$ - $a$ is in the range $[0, u^l)$, and that $\sigma$ - $b$ + $u^l$ is in the range $[0, u^l)$, for some $l$ such that $b$ is between $u^{l-1}$ and $u^l$.

The inventors have recognized and appreciated that one or more of the techniques described herein may be used by an entity to prove that a transaction amount is within a selected range. For instance, a regulator may publish a cryptographic setup for one or more ranges (e.g., $0-$3,000, $3,000-$10,000, etc.). A first entity (e.g., a custodian, an asset owner, an asset recipient, etc.) may use the cryptographic setup to commit to a transaction amount in a selected range (e.g., as described above in connection with the example of FIG. 7A). Additionally, or alternatively, the first entity may perform a proof of knowledge to prove to a second entity (e.g., another custodian, the regulator, etc.) that the transaction amount is in the selected range (e.g., as described above in connection with the example of FIG. 7B).

It should be appreciated that aspects of the present disclosure are not limited to performing a proof of knowledge in any particular manner, or at all. In some embodiments, the proof of knowledge may be a zero-knowledge proof of knowledge, so that the exact amount may not be revealed. The proof of knowledge may be interactive or non-interactive. Moreover, the first entity may interact with the second entity directly, or indirectly via a third entity.

In this manner, the second entity may be able to determine whether one or more reporting and/or recordkeeping requirements are triggered, without knowing the exact transaction amount. For instance, if it is proven that the transaction amount is in the range $0-$3,000, it may be determined that no reporting or recordkeeping requirement is triggered. Additionally, or alternatively, if it is proven that the transaction amount is in the range $3,000-$10,000, it may be determined that a recordkeeping requirement, but no reporting requirement, is triggered. Additionally, or alternatively, if it is not proven that the transaction amount is in either range, both a reporting requirement and a recordkeeping requirement may be triggered by default.

Illustrative configurations of various aspects of the present disclosure are provided below.

A1. A computer-implemented method for performing a compliance check, the method comprising acts of: receiving a commitment C for a committed value $\sigma$, wherein: the committed value $\sigma$ is in a set S of values; and the commitment C is generated, using a cryptographic commitment scheme, based on the committed value $\sigma$; accessing, from a distributed ledger, an attestation for the commitment C; checking the attestation against the commitment C, comprising: checking whether the attestation includes a cryptographic proof of the commitment C; and checking whether the cryptographic proof of the commitment C is electronically signed by a trusted entity; receiving a blinded representative V of the committed value $\sigma$; using the commitment C and the blinded representative V of the committed value $\sigma$ to perform a proof of knowledge; and in response to successfully checking the attestation against the commitment C and successfully performing the proof of knowledge, authorizing a proposed transfer of one or more digital assets.

A2. The method of configuration A1, wherein: values in the set S represent, respectively, whitelisted entities and/or jurisdictions; and the method further comprises an act of: in response to successfully performing the proof of knowledge, determining that the committed value $\sigma$ represents a whitelisted entity or jurisdiction.

A3. The method of configuration A2, wherein: checking whether the cryptographic proof of the commitment C is electronically signed by a trusted entity comprises checking whether the cryptographic proof of the commitment C is electronically signed by a Know-Your-Customer (KYC) provider; and the method further comprises an act of: in response to successfully checking the attestation against the commitment C, determining that an entity involved in the proposed transfer is associated with the whitelisted entity or jurisdiction represented by the committed value $\sigma$.

A4. The method of configuration A1, further comprising acts of: accessing a cryptographic setup for the cryptographic commitment scheme; and checking whether the cryptographic setup is electronically signed by an entity responsible for enforcing one or more transfer restrictions.

A5. The method of configuration A4, wherein: the cryptographic setup comprises a representative $A\_i$ for each value i in the set S of values; and the blinded representative V of the committed value $\sigma$ is generated based on the representative $A\_\sigma$ for the committed value $\sigma$ and a randomly-selected value v.

A6. The method of configuration A1, wherein: the proof of knowledge comprises a zero-knowledge proof of knowledge.

A7. The method of configuration A1, wherein: the proof of knowledge comprises a non-interactive proof of knowledge.

B1. A computer-implemented method for performing a know-your-customer check, the method comprising acts of: verifying an attribute value of an entity; in responses to successfully verifying the attribute value, electronically signing a cryptographic proof of a commitment C for a committed value $\sigma$, wherein: the committed value $\sigma$ is selected, based on the attribute value, from a set S of values; and the commitment C is generated, based on the committed value $\sigma$, using a cryptographic commitment scheme.

B2. The method of configuration B1, wherein: verifying the attribute value comprises physically examining one or more documents and/or taking one or more biometric measurements from the entity.

B3. The method of configuration B1, further comprising acts of: accessing a cryptographic setup for the cryptographic commitment scheme; and using the cryptographic setup to generate the commitment C based on the committed value $\sigma$.

B4. The method of configuration B3, further comprising an act of: generating the cryptographic proof of the commitment C.

B5. The method of configuration B4, further comprising acts of: receiving a distributed ledger reference; and using the distributed ledger reference to publish an attestation for the commitment C, wherein the attestation includes the cryptographic proof of the commitment C.

B6. The method of configuration B1, further comprising acts of: receiving a distributed ledger reference; and using the distributed ledger reference to access an attestation for the commitment C, wherein the attestation includes the cryptographic proof of the commitment C.

B7. The method of configuration B6, further comprising an act of: checking the attestation against the commitment C, wherein the cryptographic proof of the commitment C is signed in response to successfully checking the attestation against the commitment C.

C1. A computer-implemented method for performing a compliance check on a proposed transfer of one or more digital assets between a user and a counterparty, the method comprising acts of: receiving one or more attribute values of the counterparty, the one or more attribute values comprises a first attribute value indicating a status of a distributed ledger address of the counterparty; accessing, from a distributed ledger, one or more attribute attestations corresponding, respectively, to the one or more attribute values; checking the one or more attribute attestations against the one or more attribute values, comprising: checking whether each attribute attestation includes a cryptographic proof of the corresponding attribute value; checking whether the cryptographic proof is electronically signed by a trusted entity; and determining, based on the first attribute value indicating the status of the distributed ledger address of the counterparty, whether one or more compliance requirements are triggered.

C2. The method of configuration C1, further comprising an act of: receiving, from the user, a request to transfer the one or more digital assets, wherein: the request comprises the one or more attribute values of the counterparty; the request further comprises a pointer to the one or more attribute attestations; and the one or more attribute attestations are accessed from the distributed ledger using the pointer.

*C3.* The method of configuration C1, wherein: the one or more attribute values further comprises a second attribute value indicating the distributed ledger address of the counterparty.

C4. The method of configuration C1, wherein: the first attribute value indicates that the distributed ledger address is associated with a whitelisted entity or jurisdiction; and it is determined that the proposed transfer is exempt from the one or more compliance requirements.

*C5.* The method of configuration C4, wherein: the first attribute value comprises a commitment C for a committed value $\sigma$; the committed value $\sigma$ is in a set S of values representing, respectively, whitelisted entities and/or jurisdictions; and the commitment C is generated, using a cryptographic commitment scheme, based on the committed value $\sigma$.

C6. The method of configuration C5, further comprising acts of: receiving a blinded representative V of the committed value $\sigma$; using the commitment C and the blinded representative V of the committed value $\sigma$ to perform a proof of knowledge; and in response to successfully checking the attribute attestation corresponding to the first attribute and successfully performing the proof of knowledge, determining that the proposed transfer is exempt from the one or more compliance requirements.

C7. The method of configuration C1, wherein: the first attribute value indicates that the distributed ledger address is associated with a blacklisted entity or jurisdiction; the method further comprises an act of determining whether an amount of the proposed transfer exceeds a selected threshold; and in response to determining that the amount of the proposed transfer exceeds the selected threshold, determining that a reporting or recordkeeping requirement is triggered.

D1. A system comprising: at least one processor; and at least one computer-readable storage medium having stored thereon instructions which, when executed, program the at least one processor to perform the method according to any of configurations A1-A7, B1-B7, and C1-C7.

E1. At least one computer-readable storage medium having stored thereon instructions which, when executed, program at least one processor to perform the method according to any of configurations A1-A7, B1-B7, and C1-C7.

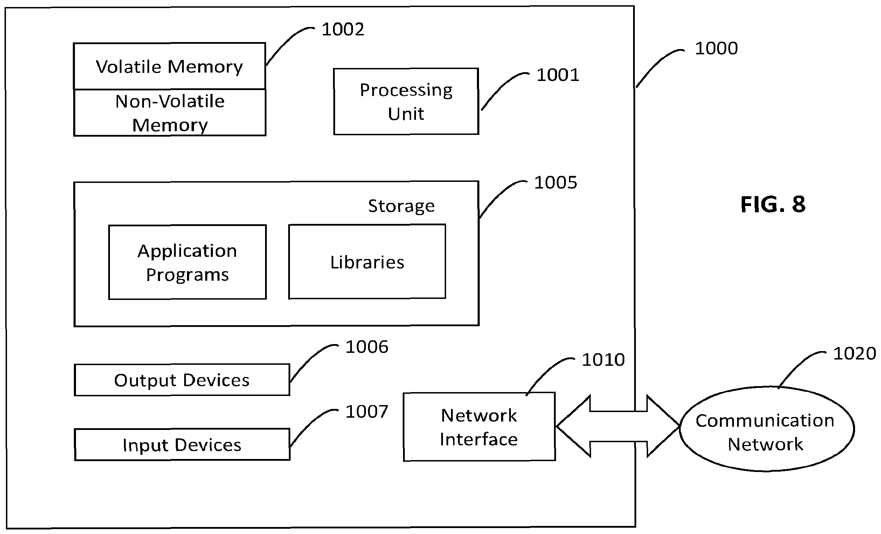

FIG. 8 shows, schematically, an illustrative computer 1000 on which any aspect of the present disclosure may be implemented.

In the example shown in FIG. 8, the computer 1000 includes a processing unit 1001 having one or more computer hardware processors and one or more articles of manufacture that comprise at least one non-transitory computer-readable medium (e.g., memory 1002) that may include, for example, volatile and/or non-volatile memory. The memory 1002 may store one or more instructions to program the processing unit 1001 to perform any of the functions described herein. The computer 1000 may also include other types of non-transitory computer-readable media, such as storage 1005 (e.g., one or more disk drives) in addition to the memory 1002. The storage 1005 may also store one or more application programs and/or resources used by application programs (e.g., software libraries), which may be loaded into the memory 1002. To perform any of the illustrative functionalities described herein, processing unit 1001 may execute one or more processor-executable instructions stored in the one or more non-transitory computer-readable media (e.g., the memory 1002, the storage 1005, etc.), which may serve as non-transitory computer-readable media storing processor-executable instructions for execution by the processing unit 1001.

The computer 1000 may have one or more input devices and/or output devices, such as devices 1006 and 1007 illustrated in FIG. 8. These devices may be used, for instance, to present a user interface. Examples of output devices that may be used to provide a user interface include printers, display screens, and other devices for visual output, speakers and other devices for audible output, braille displays and other devices for haptic output, etc. Examples of input devices that may be used for a user interface include keyboards, pointing devices (e.g., mice, touch pads, and digitizing tablets), microphones, etc. For instance, the input devices 1007 may include a microphone for capturing audio signals, and the output devices 1006 may include a display screen for visually rendering, and/or a speaker for audibly rendering, recognized text.

In the example shown in FIG. 8, the computer 1000 also includes one or more network interfaces (e.g., the network interface 1010) to enable communication via various networks (e.g., the network 1020). Examples of networks include local area networks(e.g., an enterprise network), wide area networks (e.g., the Internet), etc. Such networks may be based on any suitable technology operating according to any suitable protocol, and may include wireless networks and/or wired networks (e.g., fiber optic networks).

Having thus described several aspects of at least one embodiment, it is to be appreciated that various alterations, modifications, and improvements will readily occur to those skilled in the art. Such alterations, modifications, and improvements are intended to be within the spirit and scope of the present disclosure. Accordingly, the foregoing descriptions and drawings are by way of example only.

The above-described embodiments of the present disclosure can be implemented in any of numerous ways. For example, the embodiments may be implemented using hardware, software, or a combination thereof. When implemented in software, the software code may be executed on any suitable processor or collection of processors, whether provided in a single computer or distributed among multiple computers.

Also, the various methods or processes outlined herein may be coded as software that is executable on one or more processors running any one of a variety of operating systems or platforms. Such software may be written using any of a number of suitable programming languages and/or programming tools, including scripting languages and/or scripting tools. In some instances, such software may be compiled as executable machine language code or intermediate code that is executed on a framework or virtual machine. Additionally, or alternatively, such software may be interpreted

The techniques disclosed herein may be embodied as a non-transitory computer-readable medium (or multiple non-transitory computer-readable media) (e.g., a computer memory, one or more floppy discs, compact discs, optical discs, magnetic tapes, flash memories, circuit configurations in Field Programmable Gate Arrays or other semiconductor devices, or other non-transitory, tangible computer storage medium) encoded with one or more programs that, when executed on one or more processors, perform methods that implement the various embodiments of the present disclosure discussed above. The computer-readable medium or media may be portable, such that the program or programs stored thereon may be loaded onto one or more different computers or other processors to implement various aspects of the present disclosure as discussed above.

The terms "program" or "software" are used herein to refer to any type of computer code or set of computer-executable instructions that may be employed to program one or more processors to implement various aspects of the present disclosure as discussed above. Moreover, it should be appreciated that according to one aspect of this embodiment, one or more computer programs that, when executed, perform methods of the present disclosure need not reside on a single computer or processor, but may be distributed in a modular fashion amongst a number of different computers or processors to implement various aspects of the present disclosure.

Computer-executable instructions may be in many forms, such as program modules, executed by one or more computers or other devices. Program modules may include routines, programs, objects, components, data structures, etc. that perform particular tasks or implement particular abstract data types. Functionalities of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields to locations in a computer-readable medium that convey how the fields are related. However, any suitable mechanism may be used to relate information in fields of a data structure, including through the use of pointers, tags, or other mechanisms that establish how the data elements are related.

Various features and aspects of the present disclosure may be used alone, in any combination of two or more, or in a variety of arrangements not specifically discussed in the embodiments described in the foregoing, and are therefore not limited to the details and arrangement of components set forth in the foregoing description or illustrated in the drawings. For example, aspects described in one embodiment may be combined in any manner with aspects described in other embodiments.

Also, the techniques disclosed herein may be embodied as methods, of which examples have been provided. The acts performed as part of a method may be ordered in any suitable way. Accordingly, embodiments may be constructed in which acts are performed in an order different from illustrated, which may include performing some acts simultaneously, even though shown as sequential acts in illustrative embodiments.

Use of ordinal terms such as "first," "second," "third," etc. in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," "having," "containing," "involving," "based on," "according to," "encoding," and variations thereof herein, is meant to encompass the items listed thereafter and equivalents thereof as well as additional items.

**Claims**

1. A computer-implemented method for performing a compliance check, the method comprising acts of:

   receiving (760) a commitment $C$ for a committed value $\sigma$, wherein:

   the committed value $\sigma$ is in a set $S$ of values; and
   the commitment $C$ is generated, using a cryptographic commitment scheme, based on the committed value $\sigma$;

   checking (770) an attestation for the commitment against the commitment $C$, comprising:

   checking whether the attestation includes a cryptographic proof of the commitment $C$; and
   using a public key of a trusted entity to check the cryptographic proof of the commitment $C$;

   receiving (760) a blinded representative $V$ of the committed value $\sigma$;
   using (775) the commitment $C$ and the blinded representative $V$ of the committed value $\sigma$ to perform a proof of knowledge; and
   in response to successfully checking the attestation against the commitment $C$ and successfully performing the proof of knowledge, authorizing a proposed transfer of one or more digital assets.

2. The method of claim 1, wherein:

   values in the set S represent, respectively, whitelisted entities and/or jurisdictions; and
   the method further comprises an act of:

   in response to successfully performing the proof of knowledge, determining that the committed value $\sigma$ represents a whitelisted entity or jurisdiction.

3. The method of claim 2, wherein:

   using the public key of the trusted entity to check the cryptographic proof of the commitment $C$ comprises using a public key of a Know-Your-Customer (KYC) provider to check the cryptographic proof of the commitment $C$; and
   the method further comprises an act of:
   in response to successfully checking the attestation against the commitment $C$, determining that an entity involved in the proposed transfer is associated with the whitelisted entity or jurisdiction represented by the committed value $\sigma$.

4. The method of claim 1, further comprising acts of:

   accessing a cryptographic setup for the cryptographic commitment scheme; and
   checking whether the cryptographic setup is electronically signed by an entity responsible for enforcing one or more transfer restrictions.

5. The method of claim 4, wherein:

   the cryptographic setup comprises a representative $A_i$ for each value $i$ in the set $S$ of values; and
   the blinded representative $V$ of the committed value $\sigma$ is generated based on the representative $A_\sigma$ for the committed value $\sigma$ and a randomly-selected value $v$.

6. The method of claim 1, wherein:
   the proof of knowledge comprises a zero-knowledge proof of knowledge.

7. The method of claim1, wherein:
   the proof of knowledge comprises a non-interactive proof of knowledge.

8. The method of claim 1, the method further comprising acts of:

   verifying (715) an attribute value of an entity;
   in responses to successfully verifying the attribute value, generating (725) the attestation for the commitment $C$ for the committed value $\sigma$, wherein:

   the attestation comprises the cryptographic proof of the commitment $C$; and
   the committed value $\sigma$ is selected, based on the attribute value, from a set S of values.

**9.** The method of claim 8, wherein:
verifying the attribute value comprises physically examining one or more documents and/or taking one or more biometric measurements from the entity.

**10.** The method of claim 8, further comprising acts of:

accessing a cryptographic setup for the cryptographic commitment scheme; and
using the cryptographic setup to generate the commitment $C$ based on the committed value $\sigma$.

**11.** The method of claim 10, further comprising an act of:
generating the cryptographic proof of the commitment $C$.

**12.** The method of claim 11, further comprising an act of:
checking whether the cryptographic setup is electronically signed by an entity responsible for enforcing one or more transfer restrictions.

**13.** A system comprising:

at least one processor; and
at least one computer-readable storage medium having stored thereon instructions which, when executed, program the at least one processor to perform the method according to any of claims 1-12.

**14.** At least one computer-readable storage medium having stored thereon instructions which, when executed, program at least one processor to perform the method according to any of claims 1-12.

**Patentansprüche**

**1.** Computerimplementiertes Verfahren zum Durchführen einer Konformitätsprüfung, das Verfahren umfassend Handlungen des:

Empfangens (760) eines Commitments $C$ für einen festgelegten Wert $\sigma$, wobei:

der festgelegte Wert $\sigma$ in einer Menge $S$ von Werten ist; und
das Commitment $C$ unter Verwendung eines kryptografischen Commitmentschemas auf der Grundlage des festgelegten Wertes $\sigma$ erzeugt wird;

Überprüfens (770) einer Bescheinigung für das Commitment gegen das Commitment $C$, umfassend:

Überprüfens, ob die Bescheinigung einen kryptografischen Nachweis des Commitments $C$ einschließt; und
Verwendens eines öffentlichen Schlüssels einer vertrauenswürdigen Entität zum Überprüfen des kryptografischen Nachweises des Commitments $C$;

Empfangens (760) eines unsichtbaren Vertreters $V$ des festgelegten Wertes $\sigma$;
Verwendens (775) des Commitments $C$ und des unsichtbaren Vertreters $V$ des festgelegten Wertes $\sigma$, um einen Kenntnisnachweis zu erbringen; und
Autorisierens, als Reaktion auf die erfolgreiche Überprüfung der Bescheinigung anhand des Commitments $C$ und die erfolgreiche Durchführung des Kenntnisnachweises, einer vorgeschlagenen Übertragung eines oder mehrerer digitaler Vermögenswerte.

**2.** Verfahren nach Anspruch 1, wobei:

die Werte in der Menge $S$ jeweils für Whitelist-Entitäten und/oder Zuständigkeiten stehen; und
das Verfahren weiter umfasst eine Handlung des:
Bestimmens, als Reaktion auf erfolgreiches Durchführen des Kenntnisnachweises, dass der festgelegte Wert $\sigma$ eine Whitelist-Entität oder Zuständigkeit darstellt.

**3.** Verfahren nach Anspruch 2, wobei:

Verwenden des öffentlichen Schlüssels der vertrauenswürdigen Entität zur Überprüfung des kryptografischen Nachweises des Commitments $C$ die Verwendung eines öffentlichen Schlüssels eines Kenne-Deinen-Kunden-(Know-Your-Customer, KYC)-Anbieters zur Überprüfung des kryptografischen Nachweises des Commitments $C$ umfasst; und
das Verfahren weiter umfasst eine Handlung des:
Feststellens, als Reaktion auf die erfolgreiche Überprüfung der Bescheinigung anhand des Commitments $C$, dass eine an der vorgeschlagenen Übertragung beteiligte Entität mit der auf der Whitelist-Entität oder Zuständigkeit verbunden ist, die durch den festgelegten Wert $\sigma$ repräsentiert wird.

**4.** Verfahren nach Anspruch 1, weiter umfassend Handlungen des:

Zugreifens auf eine kryptografische Einrichtung für das kryptografische Verpflichtungsverfahren; und
Überprüfens, ob die kryptografische Einrichtung von einer Entität elektronisch signiert ist, die für die Durchsetzung einer oder mehrerer Übertragungsbeschränkungen verantwortlich ist.

5. Verfahren nach Anspruch 4, wobei:

die kryptografische Einrichtung einen Vertreter $A_i$ für jeden Wert $i$ in der Menge S von Werten umfasst; und
der unsichtbare Vertreter $V$ des festgelegten Wertes $\sigma$ auf der Grundlage des Vertreters $A_\sigma$ für den festgelegten Wert $\sigma$ und eines zufällig ausgewählten Wertes $v$ erzeugt wird.

6. Verfahren nach Anspruch 1, wobei:
der Kenntnisnachweis einen Null-Kenntnis-Kenntnisnachweis umfasst.

7. Verfahren nach Anspruch 1, wobei:
der Kenntnisnachweis einen nicht interaktiven Kenntnisnachweis umfasst.

8. Verfahren nach Anspruch 1, das Verfahren weiter umfassend Handlungen des:

Verifizierens (715) eines Attributwerts einer Entität;
Erzeugens (725), in Antwort auf die erfolgreiche Überprüfung des Attributwerts, der Bescheinigung für das Commitments $C$ für den festgelegten Wert $\sigma$, wobei:

die Bescheinigung den kryptografischen Nachweis des Committments C umfasst; und
der festgelegte Wert $\sigma$ basierend auf dem Attributwert aus einer Menge S von Werten ausgewählt wird.

9. Verfahren nach Anspruch 8, wobei:
Überprüfen des Attributwertes die physische Untersuchung eines oder mehrerer Dokumente und/oder die Durchführung einer oder mehrerer biometrischer Messungen an der Person umfasst.

10. Verfahren nach Anspruch 8, weiter umfassend Handlungen des:

Zugreifens auf eine kryptografische Einrichtung für das kryptografische Verpflichtungsverfahren; und
Verwendens der kryptografischen Einrichtung zum Erzeugen des Commitments C basierend auf dem festgelegten Wert $\sigma$.

11. Verfahren nach Anspruch 10, weiter umfassend eine Handlung des:
Erzeugens des kryptografischen Nachweises des Committments $C$.

12. Verfahren nach Anspruch 11, weiter umfassend eine Handlung des:
Überprüfens, ob die kryptografische Einrichtung von einer Entität elektronisch signiert ist, die für die Durchsetzung einer oder mehrerer Übertragungsbeschränkungen verantwortlich ist.

13. System, umfassend:

zumindest einen Prozessor; und
mindestens ein computerlesbares Speichermedium mit darauf gespeicherten Anweisungen, die, wenn sie ausgeführt werden, den mindestens einen Prozessor so programmieren, dass er das Verfahren nach einem der Ansprüche 1-12 ausführt.

14. Mindestens ein computerlesbares Speichermedium mit darauf gespeicherten Anweisungen, die, wenn sie ausgeführt werden, mindestens einen Prozessor so programmieren, dass er das Verfahren nach einem der Ansprüche 1-12 ausführt.

## Revendications

1. Procédé implémenté par ordinateur pour mettre en œuvre un contrôle de conformité, le procédé comprenant les étapes consistant à :

recevoir (760) un engagement $C$ pour une valeur engagée $\sigma$, dans lequel :

la valeur engagée $\sigma$ est dans un ensemble S de valeurs ; et
l'engagement $C$ est généré, en utilisant un schéma d'engagement cryptographique, sur la base de la valeur engagée $\sigma$ ;

la vérification (770) d'une attestation de l'engagement par rapport à l'engagement $C$, comprenant :

la vérification du fait de savoir si l'attestation inclut une preuve cryptographique de l'engagement $C$ ; et
l'utilisation d'une clé publique d'une entité de confiance pour vérifier la preuve cryptographique de l'engagement $C$ ;

la réception (760) d'un représentant aveugle $V$ de la valeur engagée $\sigma$ ;
l'utilisation (775) de l'engagement $C$ et du représentant aveugle $V$ de la valeur engagée $\sigma$ pour mettre en œuvre une preuve de connaissance ; et
en réponse à la vérification réussie de l'attestation par rapport à l'engagement $C$ et à la mise en œuvre réussie de la preuve de connaissance, autoriser un transfert proposé d'un ou plusieurs actifs numériques.

2. Procédé selon la revendication 1, dans lequel :

des valeurs dans l'ensemble S représentent, respectivement, des entités et/ou des juridictions sur liste blanche ; et
le procédé comprend en outre l'étape consistant à :
en réponse à la mise en œuvre réussie de la preuve de connaissance, déterminer que la valeur engagée $\sigma$ représente une entité ou une juridiction sur liste blanche.

3. Procédé selon la revendication 2, dans lequel :

l'utilisation de la clé publique de l'entité de confiance pour vérifier la preuve cryptographique de l'engagement $C$ comprend l'utilisation d'une clé publique d'un fournisseur de connaissance du client (KYC) pour vérifier la preuve cryptographique de l'engagement $C$ ; et
le procédé comprend en outre l'étape consistant à :
en réponse à une vérification réussie de l'attestation par rapport à l'engagement $C$, déterminer qu'une entité impliquée dans le transfert proposé est associée à l'entité ou à la juridiction sur liste blanche représentée par la valeur engagée $\sigma$.

4. Procédé selon la revendication 1, comprenant en outre des étapes consistant à :

accéder à une configuration cryptographique pour le schéma d'engagement cryptographique ; et
vérifier si la configuration cryptographique est signée électroniquement par une entité chargée de faire respecter une ou plusieurs restrictions de transfert.

5. Procédé selon la revendication 4, dans lequel :

la configuration cryptographique comprend un représentant $A_i$ pour chaque valeur $i$ dans l'ensemble $S$ de valeurs ; et
le représentant aveugle $V$ de la valeur engagée $\sigma$ est généré sur la base du représentant $A_\sigma$ pour la valeur engagée $\sigma$ et d'une valeur sélectionnée de manière aléatoire $v$.

6. Procédé selon la revendication 1, dans lequel :
la preuve de connaissance comprend une preuve de connaissance à divulgation nulle de connaissance.

7. Procédé selon la revendication 1, dans lequel :
la preuve de connaissance comprend une preuve de connaissance non interactive.

8. Procédé selon la revendication 1, le procédé comprenant en outre des étapes consistant à :

vérifier (715) une valeur d'attribut d'une entité ;
en réponse à une vérification réussie de la valeur d'attribut, générer (725) l'attestation de l'engagement $C$ pour la valeur engagée $\sigma$, dans lequel :

l'attestation comprend la preuve cryptographique de l'engagement $C$ ; et
la valeur engagée $\sigma$ est sélectionnée, sur la base de la valeur d'attribut, parmi un ensemble S de valeurs.

9. Procédé selon la revendication 8, dans lequel :
la vérification de la valeur d'attribut comprend l'examen physique d'un ou plusieurs documents et/ou la prise d'une ou plusieurs mesures biométriques de l'entité.

10. Procédé selon la revendication 8, comprenant en outre des étapes consistant à :

accéder à une configuration cryptographique pour le schéma d'engagement cryptographique ; et
utiliser la configuration cryptographique pour générer l'engagement $C$ sur la base de la valeur engagée $\sigma$.

11. Procédé selon la revendication 10, comprenant en outre une étape consistant à :
générer la preuve cryptographique de l'engagement $C$.

12. Procédé selon la revendication 11, comprenant en outre une étape consistant à :
vérifier si la configuration cryptographique est signée électroniquement par une entité chargée de faire respecter une ou plusieurs restrictions de transfert.

13. Système comprenant :

au moins un processeur ; et
au moins un support de stockage lisible par ordinateur sur lequel sont stockées des instructions qui, lorsqu'elles sont exécutées, programment l'au moins un processeur pour mettre en œuvre le procédé selon l'une quelconque des revendications 1 à 12.

14. Au moins un support de stockage lisible par ordinateur sur lequel sont stockées des instructions qui, lorsqu'elles sont exécutées, programment au moins un processeur pour mettre en œuvre le procédé selon l'une quelconque des revendications 1 à 12.

Entity A

Entity B

Selective Data
Sharing

Data
Collection
100A

Data
Collection
100B

Distributed
Ledger State
105A

Distributed
Ledger State
105B

Distributed Ledger
Synchronization

**FIG. 1A**

EP 4 088 237 B1

FIG. 1B

Data Management Service 110B

Data Collection 100B

Distributed Ledger State 105B

Distributed Ledger Client 115B

Selective Data Sharing

Distributed Ledger Synchronization

Data Management Service 110A

Data Collection 100A

Distributed Ledger State 105A

Distributed Ledger Client 115A

**FIG. 1C**

Data Management Service 110A

Data Management Service 110B

120

Share Attribute Value 122

Generate Attribute Attestation 124A

Generate Attribute Attestation 124B

Share Metadata 126

Send Distributed Ledger Reference 128

Publish Attribute Attestation 130A

Publish Attribute Attestation 130B

Check/Accept Attribute Attestation 132A

Check/Accept Attribute Attestation 132B

Distributed Ledger State 105A

Distributed Ledger State 105B

Distributed Ledger Synchronization

EP 4 088 237 B1

**FIG. 2**

EP 4 088 237 B1

**FIG. 3A**

Attribute Owner

| Data Management Service 110A |
|---|

Trusted Entity

| Data Management Service 110B |
|---|

300

Generate Attribute Attestation 302

Publish Attribute Attestation 304

Send Attribute Value, Metadata, and/or Distributed Ledger Reference 306

Verify Attribute Value 308

Check/Accept Attribute Attestation 310

Distributed Ledger State 105A

Distributed Ledger Synchronization

Distributed Ledger State 105B

EP 4 088 237 B1

**FIG. 3B**

Attribute Owner

Trusted Entity

320

| Data Management Service 110A |
| --- |

| Data Management Service 110B |
| --- |

Send Attribute Value and/or Distributed Ledger Reference 322

Verify Attribute Value 324

Generate Attribute Attestation 326

Publish Attribute Attestation 328

Send Metadata 330

Check/Accept Attribute Attestation 332

Distributed Ledger State 105A

Distributed Ledger State 105B

Distributed Ledger Synchronization

EP 4 088 237 B1

**FIG. 3C**

Attribute Owner
| Data Management Service 110A |

Trusted Entity
| Data Management Service 110B |

340

Send Distributed Ledger Reference 342

Issue Attribute Value 344

Generate Attribute Attestation 346

Publish Attribute Attestation 348

Send Attribute Value and/or Metadata 350

Confirm Attribute Value 352

Check/Accept Attribute Attestation 354

Distributed Ledger State 105A

Distributed Ledger State 105B

Distributed Ledger Synchronization

EP 4 088 237 B1

**FIG. 4**

400

**Attribute Owner**

Data Management Service 110A

**Service Provider**

Data Management Service 110B

Generate Attribute Attestation 402

Publish Attribute Attestation 404

Send Attribute Value, Metadata, and/or Distributed Ledger Reference 406

Verify Attribute Value 408

Check/Accept Attribute Attestation 410

Distributed Ledger State 105A

Distributed Ledger State 105C

Distributed Ledger Synchronization

EP 4 088 237 B1

FIG. 5A

Asset Owner

Data Collection 500A

Selective Data Sharing

Asset Recipient

Data Collection 500B

Distributed Ledger State 505A

Distributed Ledger State 505B

Distributed Ledger Synchronization

Selective Data Sharing

Distributed Ledger State 505C

Data Collection 500C

Custodian

EP 4 088 237 B1

FIG. 5B

FIG. 6

**FIG. 7A**

Regulator

Data Management Service 600E

Publish Cryptographic Setup 705

KYC Provider

Data Management Service 600D

Retrieve Cryptographic Setup 715

Verify Attribute Value 720

Generate Commitment and/or Publish Commitment Attestation 725

Asset Recipient

Data Management Service 600B

Send Attribute Value and/or Distributed Ledger Reference via Secure Channel 710

Send Commitment via Secure Channel 730

Retrieve Cryptographic Setup 735

Check Commitment and/or Commitment Attestation 740

Accept Commitment Attestation 745

700

Distributed Ledger State 505E

Distributed Ledger State 505D

Distributed Ledger State 505B

EP 4 088 237 B1

**FIG. 7B**

**FIG. 8**

EP 4 088 237 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62957508
- US 2017222814 A1
- US 2017149796 A1

**Non-patent literature cited in the description**

- **CHRISTINA GARMAN et al.** Decentralized Anonymous Credentials. *IACR, INTERNATIONAL ASSOCIATION FOR CRYPTOLOGIC RESEARCH*, vol. 20131015, 1-21
- **FLORIAN TRAMER et al.** Sealed-Glass Proofs: Using Transparent Enclaves to Prove and Sell Knowledge. *IACR, INTERNATIONAL ASSOCIATION FOR CRYPTOLOGIC RESEARCH*, 16 August 2016, vol. 20160816 (131050), 1-16
- **CAMENISCH et al.** Efficient protocols for set membership and range proofs.. *Advances in Cryptology - ASIACRYPT*, 2008, 234-252
- *Lecture Notes in Computer Science*, vol. 5350
- **CAMENISCH et al.** Efficient protocols for set membership and range proofs. *Advances in Cryptology - ASIACRYPT*, 2008, 234-252